# EUROPEAN PATENT SPECIFICATION

(11) **EP 1 759 942 B1**
(45) Date of publication and mention of the grant of the patent: **09.07.2008**
(21) Application number: 06016463.9
(22) Date of filing: 07.08.2006
(51) Int. Cl.: B60R 22/46

(54) **Seatbelt retractor and seatbelt apparatus**
Sicherheitsgurt-Aufroller und Sicherheitsgurtvorrichtung
Rétracteur de ceinture de sécurité, système de ceinture de sécurité

(30) Priority: 06.09.2005 JP 2005257407
(43) Date of publication of application: 07.03.2007
(73) Proprietor: TAKATA CORPORATION, Minato-ku, Tokyo 106-8510 (JP)
(72) Inventor: Hiramatsu, Koji, Minato-ku Tokyo 106-8510 (JP); Morimoto, Miwa, Minato-ku Tokyo 106-8510 (JP)
(74) Representative: Banzer, Hans-Jörg

(56) References cited:
- EP-A- 1 477 377
- DE-A1- 4 227 781
- DE-A1- 19 609 524
- US-A1- 2001 006 204
- US-A1- 2002 053 621

## Description

The present invention relates to a seatbelt retractor that retracts a seatbelt and, more specifically, to a seatbelt retractor having an energy absortion (EA) mechanism which absorbs inertia energy applied to a passenger when constraining a movement of the passenger by locking the seatbelt in case of abnormality, and a seatbelt apparatus provided with the same.

A seatbelt apparatus provided on a seat of a vehicle is an inevitable apparatus as a device for constraining a sudden movement of a passenger due to an acceleration that occurs upon collision of the vehicle and ensuring security of a passenger's body.

The seatbelt apparatus includes generally a seatbelt (webbing), a seatbelt retractor, and a buckle device, and so on.

The retractor retracts the seatbelt wound around a winding member (spool) inward by a spring force, and accommodates the seatbelt normally in the retracted state. When the passenger wears the seatbelt, he/she withdraws the seatbelt accommodated therein by pulling a tongue plate provided at one end of the seatbelt opposite from the winding side, and engages the same with the above-described buckle device provided in the vicinity of the seat, so that he/she wears the seatbelt.

The retractor configured in this manner locks withdrawal of the seatbelt from the winding member upon collision which generates an impact, and constrains the passenger's body which is apt to move suddenly forward by the locked seatbelt. Here, in order to further constrain the passenger's body strongly, particularly in the case of sudden deceleration of the vehicle, a pretensioner and a locking mechanism are normally provided.

The pretensioner serves to eliminate loosening of the seatbelt when an acceleration sensor detects the fact that the vehicle is brought into the state of sudden deceleration to improve a force of constraint of the seatbelt. For example, there is a system in which the loosening of the seatbelt is eliminated by reducing the longitudinal length of an expanding structure entirely by causing gas generating device to generate gas in response to a detection signal from the above-described acceleration sensor, whereby expanding a bag-shaped member, a system for eliminating loosening of the seatbelt by causing a piston to slide in a cylinder by gas from the gas generating device and rotating the spool in the retracting direction via a pinion, and so on.

The locking mechanism is provided with a locking member (locking base) that rotates with the spool. Then, in response to the detection signal from the above-described acceleration sensor, a locking member (pawl) provided on the locking base is engaged with inner teeth (ratchet teeth) provided on a fixed-side member (a frame of the retractor or the like) of the vehicle, so that the rotation of the locking base and the spool in the withdrawing direction can be restricted.

On the other hand, when the forward movement of the passenger is suddenly constrained at the time of sudden deceleration of the vehicle or the like as described above, an impact force generated by a reaction of being constrained is applied to a chest region or the like of the passenger via the seatbelt. In order to alleviate the impact force applied to the passenger, a method of employing a mechanism for absorbing impact energy applied to the passenger by maintaining a predetermined tensile load of the seatbelt while applying at least a certain reeling-out resistance to the seatbelt immediately after being locked and, in this state, reeling out the seatbelt by a predetermined length (Energy Absorption; hereinafter referred to as "EA" mechanism) is already known.

In this method, a shaft (torsion bar) that can be plastically deformed is arranged inside the above-described spool around which the seatbelt is wounded, and at this time, one side of the torsion bar is coupled to the spool side and the other side thereof is coupled to the locking base side. When the locking base is locked so as not to be capable of rotating by the above-described locking mechanism at the time of sudden deceleration of the vehicle such as the case of emergency, a tensile force of the seatbelt that constrains the passenger who is apt to move forward by the action of the inertia force acts as a relative rotational force of the one side of the torsion bar with respect to the other side thereof in the seatbelt withdrawing direction and, when the relative rotational force reaches or exceeds a certain value, the torsion bar is plastically deformed, so that the collision energy is absorbed by the plastic deformation resistance generated at this time. Accordingly, the spool rotates gradually in the seatbelt withdrawing direction irrespective of the locking mechanism being effective, so that the seatbelt is reeled out while applying at least a certain tensile force to the seatbelt, thereby alleviating a force applied between the seatbelt and the passenger's body.

For example, as stated in the generic Japanese Unexamined Patent Application Publication No.2002-120693, which corresponds to EP 1 199 230 A, in a seatbelt retractor provided with the pretensioner, the locking mechanism, and the EA mechanism as described above, when a slight rotation of the spool in the above-described seatbelt withdrawing direction is allowed when the EA mechanism is activated as described above, the pretensioner is coupled with the spool in terms of rotation and is already operated in the seatbelt retracting direction (that is, in the opposite direction) as described above.

However, there exist the following problems in the above-described related art.

In other words, assuming that a structure in which a portion of the spool on one side which is coupled to the torsion bar is coupled to the pretensioner and the locking base that is locked by the locking mechanism is coupled to the other side of the torsion bar is employed, even though the pretensioner is operated in the retracting direction of the spool and then the locking mechanism locks the rotation of the other side of the torsion bar in the retracting direction as described above, when the one side of the torsion bar is rotated in a twisted manner relatively with respect to the other side thereof by the EA mechanism, the operation of the above-described pretensioner is directed in the direction opposite to the direction of relative rotation thereof to block the relative rotation. In other words, the operation of the EA mechanism is affected by the operation of the above-described pretensioner, and hence it is difficult to secure the stable operation.

It is an object of the present invention to provide an improved seatbelt retractor, in particular, a seatbelt retractor that can secure a stable EA operation without being affected by the operation of the pretensioner, and a seatbelt apparatus using the same.

According to the present invention, this object is achieved by a seatbelt retractor as defined in claim 1, and a seatbelt apparatus as defined in claim 16. The dependent claims define preferred or advantageous embodiments.

In order to achieve the above-described object, a seatbelt retractor according to a first aspect of the invention includes a spool for retracting a seatbelt; a torsion bar arranged radially inside of the spool, the torsion bar being coupled to the spool at axially one side thereof and torsionally deformed by a relative displacement between the axially one side and the axially other side so as to be capable of absorbing passenger's kinetic energy; a pretensioner positioned on the axially other side of the spool for generating a rotational drive force for rotating the spool in the seatbelt retracting direction in a state of sudden deceleration of a vehicle; and a relay locking mechanism for locking the spool with respect to a fixed-side member in the vehicle so as to restrict the rotation of the spool in the seatbelt withdrawing direction in the normal state and unlocking the spool with respect to the fixed-side member while locking the axially other side of the torsion bar with respect to the fixed-side member so as to restrict the rotation of the same in the seatbelt withdrawing direction in the state of sudden deceleration of the vehicle.

In this construction, the relay locking mechanism first restricts the rotation of the spool in the seatbelt withdrawing direction in the normal state (including gentle deceleration of the vehicle, hereinafter).

On the other hand, at the time of sudden deceleration of the vehicle, the pretensioner is activated in response to the sudden deceleration, and the rotational drive force thereof causes the spool to rotate in the seatbelt retracting direction via the torsion bar, whereby a force of constraint of the seatbelt with respect to the passenger is improved. Then, the passenger's body pulls the seatbelt with a large force exceeding a predetermined value by inertia at the time of sudden deceleration of the vehicle, and hence a force in the seatbelt withdrawing direction is significantly applied to the spool. However, the above-described relay locking mechanism unlocks the spool (in other words, axially one side of the torsion bar) with respect to the fixed-side member while locking the axially other side of the torsion bar with respect to the above-described fixed-side member. Accordingly, the axially one side of the torsion bar and the spool coupled thereto are rotationally displaced relatively with respect to the axially other side of the torsion bar, and hence the passenger's kinetic energy can be absorbed by the torsional deformation of the torsion bar (EA mechanism). Since the pretensioner is located on the other side of the spool, the operation of the EA mechanism in which the one side of the torsion bar is twisted and rotates relatively with respect to the other side as described above is stabilized without being affected by the operation of the above-described pretensioner.

In the manner described above, the spool coupled to axially one side of the torsion bar is locked in the normal state, while only the axially other side of the torsion bar is locked and the axially one side thereof and the spool coupled thereto are released for allowing torsional deformation of the torsion bar at the time of sudden deceleration of the vehicle. Therefore, the stable EA operation without being affected by the operation of the pretensioner is achieved.

The seatbelt retractor may include a locking member positioned on the axially other side of the spool and connected to the axially other side of the torsion bar, wherein the pretensioner provides a rotational drive force for rotating the spool in the seatbelt retracting direction to the locking member in the state of sudden deceleration of the vehicle and the relay locking mechanism includes a first locking member for locking the locking member to the fixed-side member of the vehicle.

At the time of sudden deceleration of the vehicle, by providing the rotational drive force to the locking member by the pretensioner, the spool can be rotated in the seatbelt retracting direction via the locking member and the torsion bar. The relay locking mechanism, being provided with the first locking member, can lock the above described locking member with respect to the fixed-side member of the vehicle such as the frame.

Further, the first locking member may be a pawl provided rotatably on the locking member for performing a locking operation with respect to the locking member when the relative rotational displacement comes about between the locking member and the spool.

With the provision of the pawl as the first locking member, when the rotational drive force is applied by the pretensioner to the locking member at the time of sudden deceleration of the vehicle and the relative rotational displacement comes about between the locking member and the spool, the pawl can be rotated to lock the locking member.

The seatbelt retractor may include a shear pin provided on one of the first locking member and the spool so as to be locked with respect to the other one of those, the shear pin being sheared according to a load applied thereto, wherein the first locking member is a pawl which performs a locking operation with an urging force applied by a spring in the direction that locks the locking member when the shear pin is sheared.

With the provision of the pawl applied with the urging force by the spring as the first locking member and the mutual engagement between the pawl and the spool with the shear pin, when the pretensioner applies a rotational drive force to the locking member at the time of sudden deceleration of the vehicle and hence a relative rotational displacement comes about between the locking member and the spool, the shear pin is sheared and the pawl is rotated in the locking direction by the urging force applied by the spring, whereby the locking member achieves the locking operation.

In any one of the above-described embodiments the relay locking mechanism may include a second locking member for locking the spool with respect to the fixed-side member of the vehicle.

The spool can be locked with respect to the fixed-side member of the vehicle such as a frame with the second locking member provided on the relay locking mechanism.

The second locking member may be a pawl rotatably provided on axially one side of the spool for performing the locking operation with respect to the spool according to the deceleration of the vehicle.

With the provision of the pawl as the second locking member, the locking operation with respect to the spool can be performed by rotating the pawl corresponding to the signal from, for example, a sensor according to the deceleration of the vehicle.

The axially one side of the torsion bar and the spool may be coupled so as to be capable of accepting a predetermined amount of relative rotational displacement therebetween, wherein the second locking member is a pawl for releasing the locking operation with respect to the spool in a state in which the rotational displacement in which the spool rotates relatively ahead of the locking member in the seatbelt withdrawing direction comes about.

Accordingly, when the seatbelt is withdrawn in the normal state, since the rotational displacement in which the spool rotates relatively ahead of the locking member in the seatbelt retracting direction comes about, the locked state of the spool is released and hence the seatbelt can be withdrawn easily.

The locking member may be formed with a cam groove on a surface opposing to the spool, and the second locking member may include a camshaft extending from a rotation axis and a cam pin which is to be engaged with the cam groove for causing the second locking member to rotate via the camshaft along the cam groove when the relative rotational displacement comes about between the spool and the locking member.

Accordingly, when the pretensioner applies the rotational drive force to the locking member in case of the sudden deceleration of the vehicle and hence the relative rotational displacement comes about between the locking member and the spool, the locked state of the spool by the pawl can be released to be capable of rotating the one side of the torsion bar relatively with respect to the other side thereof.

According to another aspect of the invention, a seatbelt retractor includes a spool for retracting a seatbelt; a torsion bar arranged radially inside of the spool, the torsion bar being coupled to the spool at axially one side thereof so as to be capable of accepting a predetermined amount of relative rotational displacement and torsionally deformed by a relative displacement between the axially one side and the axially other side so as to be capable of absorbing passenger's kinetic energy; a locking base located on the axially other side of the spool and coupled to the axially other side of the torsion bar; a pretensioner positioned on the axially other side of the spool for generating a rotational drive force for rotating the spool in the seatbelt retracting direction and transmitting the same to the locking base in a state of sudden deceleration of a vehicle; a first pawl rotatably provided on the locking base for being locked with respect to a shear pin formed on the spool in the normal state and shearing the shear pin when a relative rotational displacement exceeding the predetermined amount comes about between the locking base and the spool by the operation of the pretensioner to lock the locking base with respect to a fixed-side member of the vehicle by an urging force applied by a spring; and a second pawl rotatably provided on the axially one side of the spool and provided with a cam mechanism for locking the spool with respect to the fixed-side member of the vehicle according to a deceleration of the vehicle in the normal state and releasing the locking operation with respect to the spool when a relative rotational displacement comes about between the locking base and the spool by the operation of the pretensioner, and is characterized in that the cam mechanism includes a camshaft extending from a rotation axis of the second pawl and a cam pin which is to be engaged with a cam groove formed on the locking base for causing the second locking member to rotate via the camshaft along the cam groove when a relative rotational displacement comes about between the spool and the locking base, and causes the second pawl to rotate so as to release the locking operation with respect to the spool in a state in which the rotational displacement in which the spool rotates relatively ahead of the locking member in the seatbelt withdrawing direction comes about.

According to this aspect, the shear pin is in the unsheared state, which is just-about-not-sheared, in the normal state, and the first pawl is in the unlocked state in which the locking base is not locked with respect to the fixed-side member. At this time, when the second pawl locks the spool with respect to the fixed-side member according to the deceleration of the vehicle, the rotation of the spool in the seatbelt withdrawing direction is restricted.

On the other hand, at the time of sudden deceleration of the vehicle, the pretensioner is activated as a first stage, and the locking base, the torsion bar and the spool rotate in the seatbelt retracting direction by the rotational drive force, whereby the force of constraint of the seatbelt with respect to the passenger is improved. At this time, the rotational displacement in which the locking base rotates relatively ahead of the spool in the seatbelt retracting direction comes about, that is, the rotational displacement in which the spool rotates relatively ahead of the locking member in the seatbelt withdrawing direction comes about, whereby the second pawl releases the locking operation with respect to the spool by the cam mechanism. Then, with the subsequent operation of the pretensioner, the shear pin is sheared by the relative rotational displacement exceeding the predetermined amount coming about between the locking base and the spool (the predetermined amount corresponds to the amount of the relative rotational displacement accepted by the coupling between the spool and the torsion bar), and the first pawl locks the locking base with respect to the fixed-side member of the vehicle by the urging force applied by the spring.

Consequently, the axially one side of the torsion bar coupled to the spool is rotationally displaced relatively with respect to the axially other side thereof (which is fixed to the locking base locked by the first pawl as described above), and the passenger's kinetic energy is absorbed by the torsional deformation of the torsion bar (EA mechanism). At this time, since the pretensioner is located on the axially other side of the spool and is coupled to the locking base, the operation of the EA mechanism in which the one side of the torsion bar is twisted and is relatively rotated with respect to the other side thereof as described above is not affected by the operation of the above-described pretensioner, and the stable operation is secured.

According to yet another aspect of the invention, a seatbelt retractor includes a spool for retracting a seatbelt; a torsion bar arranged radially inside of the spool, the torsion bar being coupled to the spool at axially one side thereof and torsionally deformed by a relative displacement between the axially one side and the axially other side so as to be capable of absorbing passenger's kinetic energy; a pretensioner positioned on the axially other side of the spool for generating a rotational drive force for rotating the spool in the seatbelt retracting direction in a state of sudden deceleration of a vehicle and locking the axially other side of the torsion bar with respect to the fixed-side member so as to restrict the rotation in the seatbelt withdrawing direction thereof for a predetermined duration; and a locking member for locking the spool with respect to the fixed-side member of the vehicle so as to restrict the rotation thereof in the seatbelt withdrawing direction in the normal state and unlocking the spool with respect to the fixed-side member in the state of sudden deceleration of the vehicle.

Accordingly, in the normal state, the locking member restricts the rotation of the spool in the seatbelt withdrawing direction.

On the other hand, at the time of sudden deceleration of the vehicle, the pretensioner is activated in response to the sudden deceleration thereof, the spool is rotated by the rotational drive force via the torsion bar in the seatbelt retracting direction, whereby the force of constraint of the seatbelt with respect to the passenger is improved. Subsequently, the passenger's body pulls the seatbelt by a large force exceeding the predetermined value by inertia at the time of sudden deceleration of the vehicle, and the force in the seatbelt withdrawing direction is largely applied to the spool. However, the above-described engaging member unlocks the spool (in other words, the axially one side of the torsion bar) with respect to the fixed-side member at the time of sudden deceleration of the vehicle, while the pretensioner locks the axially other side of the torsion bar with respect to the above-described fixed-side member for a predetermined duration. Accordingly, the axially one side of the torsion bar and the spool coupled thereto are rotationally displaced relatively with respect to the axially other side of the torsion bar, and the passenger's kinetic energy can be absorbed by the torsional deformation of the torsion bar (EA mechanism). Since the pretensioner is located on the other side of the spool, the operation of the EA mechanism in which the one side of the torsion bar is twisted and relatively rotated with respect to the other side as described above can be stabilized without being affected by the operation of the above-described pretensioner.

As described thus far, according to the present aspect, the spool coupled to the axially one side of the torsion bar is locked in the normal state, while only the axially other side of the torsion bar is locked and the axially one side thereof and the spool coupled thereto are released for allowing torsional deformation of the torsion bar at the time of sudden deceleration of the vehicle. Therefore, the stable EA operation that is not affected by the operation of the pretensioner is achieved.

In any one of the above-described aspects or embodiments, the pretensioner may include a gas generator, a conduit in which gas generated by the gas generator is blown in, a series of plurality of balls arranged in the conduit and accelerated by the gas; and a clutch to be coupled to the axially other side of the torsion bar, and means for converting the movement of the accelerated balls into a force for rotating the torsion bar.

Accordingly, when the pretensioner is activated at the time of sudden deceleration of the vehicle, the rotational drive force in the seatbelt retracting direction is applied to the axially other side of the torsion bar via the locking member or the like, and then the restriction of rotation of the axially other sides of the locking member and the torsion bar in the seatbelt withdrawing direction can be maintained for a certain duration until the gas pressure in the conduit is lowered.

According to still yet another aspect of the invention, a seatbelt retractor includes a spool for retracting a seatbelt; a torsion bar arranged radially inside of the spool, the torsion bar being coupled to the spool at axially one side thereof so as to be capable of accepting a predetermined amount of relative rotational displacement and torsionally deformed by a relative displacement between the axially one side and the axially other side so as to be capable of absorbing passenger's kinetic energy; a locking base located on the axially other side of the spool and coupled to the axially other side of the torsion bar; a first pawl rotatably provided on the locking base for locking the locking base with respect to the fixed-side member of the vehicle according to the deceleration of a vehicle; a second pawl rotatably provided on axially one side of the spool for locking the spool with respect to the fixed-side member of the vehicle according to the deceleration of the vehicle; a pretensioner located on the axially other side of the spool for generating a rotational drive force to cause the spool to rotate in the seatbelt retracting direction and transmitting the same to the locking base in a state of sudden deceleration of the vehicle; and a shear shaft provided so as to penetrate through the locking base and the spool in the axial direction as a common rotation axis which is coupled respectively to the first pawl and the second pawl, and is provided with a presumptive shearing portion which is to be sheared according to a load applied thereto, wherein the presumptive shearing portion of the shear shaft is set to have a shearing strength to maintain the substantially unsheared state relatively so as to keep a coupled state between the first pawl and the second pawl in the normal state, and to be sheared when the pretensioner is operated in the state of sudden deceleration of the vehicle on the basis of a force applied to the spool to cause the same to rotate in the seatbelt retracting direction by the pretensioner to release the coupled state between the first pawl and the second pawl.

The presumptive shearing portion of the shear shaft is preferably in the substantially unsheared state, which is just-about-not-sheared, in the normal state, the spool is coupled to the locking base via the shear shaft, and the first pawl and the second pawl are connected so as to be interlocked with each other. At this time, when the first pawl locks the locking base and the second pawl locks the spool respectively to the fixed-side member of the vehicle according to the deceleration of the vehicle, the rotation of the spool in the seatbelt retracting direction is impaired.

On the other hand, at the time of sudden deceleration of the vehicle, the pretensioner is activated in response to the sudden deceleration, and the locking base is rotated in the seatbelt retracting direction by the rotational drive force thereof to improve the force of constraint of the seatbelt with respect to the passenger. The presumptive shearing portion of the above-described shear shaft is sheared by the rotational drive force of the pretensioner at the time of sudden deceleration of the vehicle to release coupling between the above-described second pawl on the axially one side and the first pawl on the axially other side, thereby releasing coupling between the locking base and the spool. Subsequently, the passenger's body pulls the seatbelt with a large force exceeding the predetermined value by inertia at the time of sudden deceleration of the vehicle, and hence a large force is applied to the spool in the seatbelt withdrawing direction. However, as described above, since the coupling between the locking base and the spool is already released, the axially one side of the torsion bar coupled to the spool is rotationally displaced relatively with respect to the axially other side (which is fixed to the locking base as described above), and the torsional deformation of the torsion bar absorbs the passenger's kinetic energy (EA mechanism). At this time, since the pretensioner is located on the axially other side of the spool and is coupled to the locking base, the operation of the EA mechanism in which the one side of the torsion bar is twisted and relatively rotated with respect to the other side as described above can secure the stable operation without being affected by the operation of the above-described pretensioner.

As described thus far, according to the present aspect, both of the spool coupled to the axially one side of the torsion bar and the locking base coupled to the axially other side thereof are locked in the normal state, while only the axially other side of the torsion bar is locked and the axially one side thereof and the spool coupled thereto are released for allowing torsional deformation of the torsion bar at the time of sudden deceleration of the vehicle. Therefore, the stable EA operation that is not affected by the operation of the pretensioner is achieved.

The first pawl may be applied with an urging force in the locking direction of the locking member by a spring when the shear shaft is sheared, whereby the locking operation is achieved.

Since.the urging force is constantly applied to the first pawl and the shear shaft for controlling the rotation of the first pawl is sheared in a second stage at the time of the sudden deceleration of the vehicle, the pawl is rotated in the locking direction with the urging force applied by the spring, whereby the locking operation of the locking member is achieved.

The second pawl may release the locking operation with respect to the spool when the shear shaft is sheared.

Accordingly, the spool coupled to the axially one side of the torsion bar is rotationally displaced relatively with respect to the locking base coupled to the axially other side thereof in the second stage of the sudden vehicle deceleration of the vehicle, so that the torsional deformation of the torsion bar absorbs the passenger's kinetic energy.

The locking member may be formed with a cam groove on a surface opposing the spool, the shear shaft includes a cam pin which is to be engaged with the cam groove for causing the second pawl to be rotated via the shear shaft along the cam groove when the relative rotational displacement comes about between the spool and the locking member, and the presumptive shearing portion of the shear shaft is provided on the side of the first pawl with respect to a joint portion of the shear shaft with respect to the cam pin.

Accordingly, when the relative rotational displacement comes about between the locking member and the spool in the second stage of the sudden deceleration of the vehicle, the locking of the spool by the first pawl is released to allow the relative rotation of the one side of the torsion bar with respect to the other side thereof.

According to a further aspect of the invention, a seatbelt apparatus is provided which includes a seatbelt for constraining a passenger, a seatbelt retractor for withdrawably retracting one side of the seatbelt, a tongue provided on the seatbelt, and a buckle device for causing the passenger to wear the seatbelt by being engaged with the tongue, wherein the seatbelt retractor includes a spool for retracting the seatbelt; a torsion bar arranged radially inside of the spool; the torsion bar being coupled to the spool at axially one side thereof and torsionally deformed by a relative displacement between the axially one side and the axially other side so as to be capable of absorbing passenger's kinetic energy; a pretensioner positioned on the axially other side of the spool for generating a rotational drive force for rotating the spool in the seatbelt retracting direction in a state of sudden deceleration of the vehicle; and a relay locking mechanism for locking the spool with respect to a fixed-side member in the vehicle so as to restrict the rotation of the spool in the seatbelt withdrawing direction in the normal state and unlocking the spool with respect to the fixed-side member while locking the axially other side of the torsion bar with respect to the fixed-side member so as to restrict the rotation of the same in the seatbelt withdrawing direction in the state of sudden deceleration of the vehicle.

In the normal state, the relay locking mechanism provided on the seatbelt retractor first restricts the rotation of the spool in the seatbelt withdrawing direction.

On the other hand, in case of the sudden deceleration of the vehicle, the pretensioner is activated in response to the sudden deceleration, and the spool rotates in the seatbelt retracting direction via the torsion bar by the rotational drive force thereof, whereby the force of constraint of the seatbelt with respect to the passenger is improved. Thereafter, the passenger's body pulls the seatbelt by a large force exceeding a predetermined value by inertia at the time of sudden deceleration of the vehicle and a large force in the seatbelt withdrawing direction is applied to the spool. However, the above-described relay locking mechanism releases the locking of the spool (in other words, the axially one side of the torsion bar) with respect to the fixed-side member while locking the axially other side of the torsion bar with respect to the fixed-side member at the time of sudden deceleration of the vehicle. Accordingly, the axially one side of the torsion bar and the spool coupled thereto are rotationally displaced relatively with respect to the axially other side of the torsion bar, and hence the passenger's kinetic energy can be absorbed by the torsional deformation of the torsion bar (EA mechanism). Since the pretensioner is located on the other side of the spool, the operation of the EA mechanism in which the one side of the torsion bar is twisted and relatively rotated with respect to the other side as described above is stabilized without being affected by the operation of the above-described pretensioner.

As described thus far, the spool coupled to axially one side of the torsion bar is locked in the normal state, while only the axially other side of the torsion bar is locked and the axially one side thereof and the spool coupled thereto are released for allowing torsional deformation of the torsion bar at the time of sudden deceleration of the vehicle. Therefore, the stable EA operation that is not affected by the operation of the pretensioner is achieved.

According to the present invention, the stable EA operation that is not affected by the operation of the pretensioner is achieved.

Referring now to the drawings, embodiments of the present invention will be described next. The embodiments are examples in which the present invention is applied to a seatbelt apparatus of a motor vehicle.
Fig. 1 is a drawing showing a general structure of a seatbelt apparatus according to an embodiment of the present invention together with a passenger.
Fig. 2 is a vertical cross-sectional view showing a general schematic structure of a seatbelt retractor according to a first embodiment of the present invention.
Fig. 3 is a drawing explaining a configuration of a main pawl on the side of a spool according to the same embodiment.
Fig. 4 is a drawing explaining a configuration of a sub pawl on a locking base side according to the same embodiment.
Fig. 5 is a drawing showing an operation and the effects of the seatbelt retractor in the normal state according to the same embodiment.
Fig. 6 is a drawing showing the operation and the effects of the seatbelt retractor at the time of sudden deceleration of a vehicle according to the same embodiment.
Fig. 7 is a cross-sectional view of a pretensioner taken along the cross section VII-VII in Fig. 2, showing a state before operation of the pretensioner.
Fig. 8 is a cross-sectional view of the pretensioner taken along the cross section VII-VII in Fig. 2, showing a state immediately after the operation of the pretensioner.
Fig. 9 is a drawing showing a line of pressure characteristics of the pretensioner.
Fig. 10 is a drawing for explaining a configuration of a modification in which a centrifugal pawl is provided on the locking base.
Fig. 11 is a vertical cross-sectional view showing a general schematic structure of the seatbelt retractor according to a second embodiment of the present invention.
Fig. 12 is a drawing showing a configuration of a camshaft around a distal end according to the same embodiment.
Fig. 13 is a drawing showing the operation and the effects of the seatbelt retractor in the normal state according to the same embodiment.
Fig. 14 is a drawing showing the operation and the effects of the seatbelt retractor at the time of sudden deceleration of the vehicle according to the same embodiment.

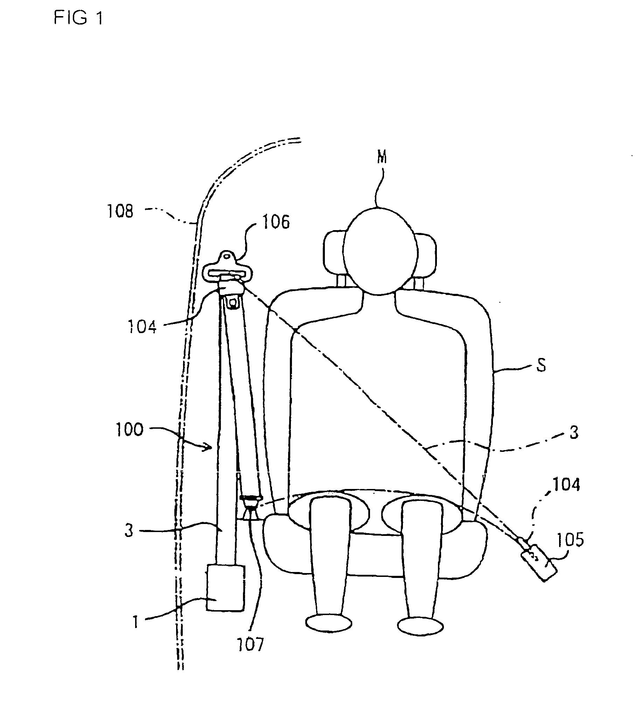

Fig. 1 is a front view of a general configuration of a seatbelt apparatus provided with a seatbelt retractor according to a first embodiment shown together with a passenger.

In Fig. 1, a seatbelt apparatus 100 is arranged in a vehicle body 108 of a vehicle and includes a seatbelt 3 for constraining a passenger M on a seat S, a seatbelt retractor 1 for retracting one side of the seatbelt 3 so as to be capable of being withdrawn, a tongue 104 slidably provided on the seatbelt 3, and a buckle device 105 which engages the tongue 104.

The seatbelt 3 is retracted by the seatbelt retractor 1 at one side thereof as described above, is passed through a shoulder anchor 106 at a midsection thereof, and is connected to a vehicle body 108 side by a fixture 107 at an end on the other side thereof.

The seatbelt retractor according to the first embodiment of the present invention will be described below.

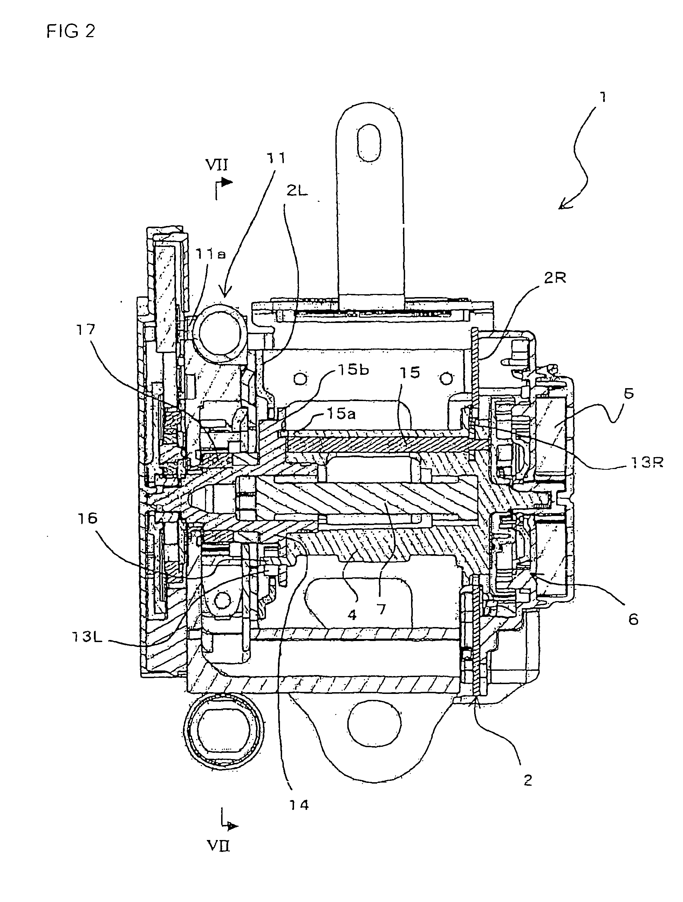

Fig. 2 is a vertical cross-sectional view showing a general schematic structure of the seatbelt retractor 1 according to the first embodiment. In Fig. 2, the seatbelt retractor 1 includes a frame 2 (fixed-side member) of an angular C-shape having two parallel side walls 2L, 2R and a back wall (not shown) which extends so as to couple therebetween, a spool 4 rotatably supported between both side walls 2L, 2R of the frame 2 for retracting the seatbelt 3 (not shown in Fig. 2), deceleration sensing means (not shown) which senses a gentle deceleration of a vehicle generated upon light collision of the vehicle and is activated, a lock activation mechanism 6 which is activated by the deceleration sensing means for restricting at least a rotation of the spool 4 in the belt withdrawing direction, a torsion bar 7 loosely fitted and penetrated through the spool 4 radially inside thereof in the axial direction and being coupled to the spool 4 at axially one side thereof (right side in Fig. 2) so as to allow relative rotational displacement by a predetermined amount (described in detail later) and hence torsionally deformed by the relative displacement between the axially one side and the axially other side (left side in Fig. 2), thereby being capable of absorbing kinetic energy of the passenger, a spiral spring 5 for applying an urging force to the spool 4 constantly in the belt retracting direction, a main pawl 13R (second pawl, second locking member) pivotably held by the spool 4 on the axially one side thereof (right side in Fig. 2) for locking the spool 4 with respect to the frame 2 according to the deceleration of the vehicle, a locking base 14 (locking base, locking member) rotatably supported by the frame 2 on the other side (left side in Fig. 2) of the torsion bar 7 and the spool 4 and fixed to the torsion bar 7 on the axially other side (left side in Fig. 2) thereof, a sub pawl 13L (first pawl, first locking member) pivotably held by the locking base 14 for locking the locking base 14 with respect to the side wall 2L of the frame 2 at the time of sudden deceleration of the vehicle, a pretensioner 11 positioned on the axially other side (left side in Fig. 2) of the torsion bar 7 and the spool 4 for generating a rotational drive force for causing the spool 4 to rotate in the seatbelt 3 retracting direction by being activated at the time of sudden deceleration of the vehicle, such as in the case of emergency, and transmitting the same to the locking base 14 (described in detail in the description of modification later), and a camshaft 15 extending from a rotation axis of the main pawl 13R and penetrating through the spool 4 to the locking base 14.

An urging force is constantly applied to the spool 4 in the seatbelt 3 retracting direction by a spring force of the above-described spiral spring 5. A shear pin 16 is formed on the axially other side of the spool 4, and is rotated integrally other than a predetermined amount of relative rotational displacement between the spool 4 and the locking base 14 (a predetermined amount of relative rotational displacement allowed between the spool 4 and the torsion bar 7 described above) which is allowed until the shear pin 16 is sheared as described later. Therefore, the locking base 14 is also constituted "spool means" for retracting/withdrawing the seatbelt 3 as well as the spool 4.

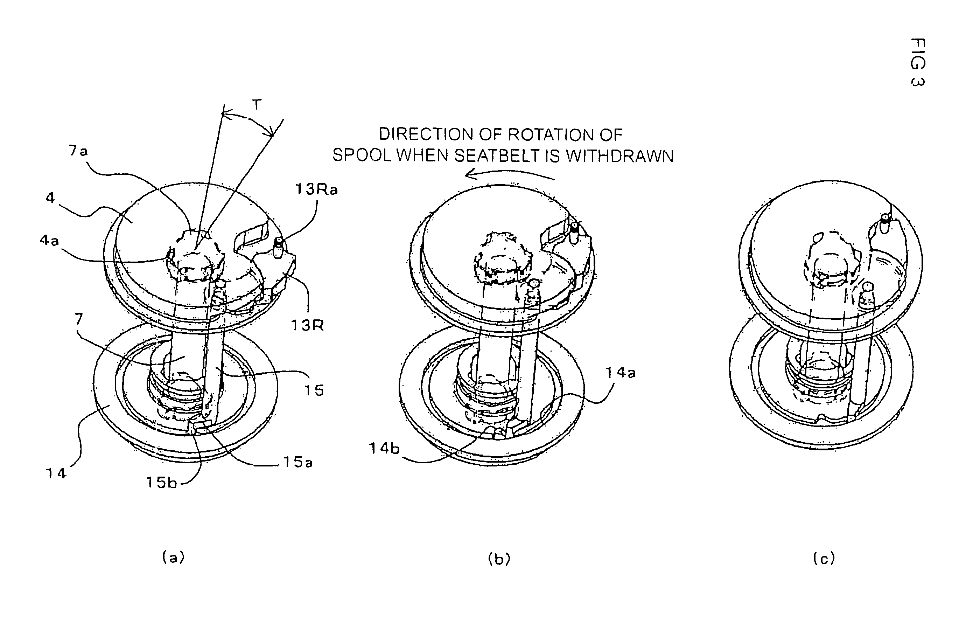

Fig. 3 is a drawing for explaining a structure of the main pawl 13R on the spool 4 side. Fig. 3(a) is a drawing showing the main pawl 13R in the locked state; Fig. 3(b) is a drawing showing the main pawl 13R located in a state between the locked state and the unlocked state; and Fig. 3(c) is a drawing showing the main pawl 13R in the unlocked state.

In Fig. 3, the torsion bar 7 is formed with an external tooth gear 7a having three external teeth on an outer periphery on the axially one side thereof (upper side in Fig. 3), and the spool 4 is formed on the inner periphery at the center thereof with an internal tooth gear 4a having three internal teeth, so that the torsion bar 7 and the spool 4 are coupled by engagement between the external tooth gear 7a and the internal tooth gear 4a. Since the spacing between the internal teeth of the internal tooth gear 4a of the spool 4 is larger than the width of each external tooth of the external tooth gear 7a of the torsion bar 7, there exists a so-called backlash in the connection between the torsion bar 7 and the spool 4, and hence the torsion bar 7 and the spool 4 are coupled with an allowance of a relative rotational displacement of a predetermined amount T which corresponds to the difference between the spacing among the internal teeth and the width of the external tooth. Since the axially other side of the torsion bar 7 (lower side in Fig. 3) and the locking base 14 are fixedly coupled to each other, the relative rotational displacement of the same predetermined amount T freely comes about in the normal state (in the above-described state in which the shear pin 16 is not sheared) also between the locking base 14 and the spool 4.

The main pawl 13R is formed with an operating pin 13Ra on a surface opposing the lock activation mechanism 6, and is formed with a coupling plate 15a and a cam pin 15b at an end of the camshaft 15 extending from the rotation axis of the main pawl 13R on the axially other side (lower side in Fig. 3). On the other hand, the locking base 14 is formed with a circumferential groove 14a concentrically with the rotation axis on a surface thereof on the side of the spool 4, and a lead-in groove 14b is formed at a part of the circumferential groove 14a on the inner peripheral side.

The cam pin 15b engages the cam groove that is composed of the lead-in groove 14b and the circumferential groove 14a therearound and, in the state in which the locking base 14 and the spool 4 are in the relatively rotating positional relation shown in Fig. 3(a), the lead-in groove 14b is formed into an arcuate shape that corresponds to a rotational orbit of the cam pin in the case in which the camshaft 15 is rotated. Therefore, the camshaft 15 and the main pawl 13R can be rotated freely to an extent corresponding to the rotational angle equal to the circumferential angle of the lead-in groove 14b. Then, when the relative rotational displacement comes about between the locking base 14 and the spool 4 as described above from this state, the cam pin 15b causes the camshaft 15 to rotated along the cam groove, and the main pawl 13R to rotate toward the inner periphery side of the spool 4.

The rotation of the main pawl 13R will be described in detail. In the normal state, the locking base 14 and the spool 4 are in the relatively rotating positional relation shown in Fig. 3(a), and in this state, the main pawl 13R can freely rotate as described above. Therefore, by operating the operating pin 13Ra, the state can be freely switched between a locked state in which the main pawl 13R is projected toward the outer peripheral side of the spool 4 and an unlocked state in which it is stored in the inner peripheral side of the spool 4 (the unlocked state in this case is not shown in the drawing).

The lock activation mechanism 6 is the same as those publicly known as the mechanism of this type, and moves the operating pin 13Ra shown in Fig. 3 toward the outer periphery by the operation of the above-described deceleration sensing means to bring the main pawl 13R to the locked state in which it is projected toward the outer peripheral side with respect to the spool 4 when the vehicle is gently decelerated, thereby engaging (meshing with) the main pawl 13R with the internal teeth (not shown) of the side wall 2R of the frame 2, so that the rotation of the spool 4 in the seatbelt 3 withdrawing direction is restricted. Then, when the vehicle is stopped and brought into a stable state, the lock activation mechanism 6 restores the operating pin 13Ra to the inner peripheral side to release locking of the main pawl 13R.

In addition, as shown in Fig. 3(a), when the rotational displacement in which the spool 4 rotates relatively ahead of the locking base 14 in the seatbelt 3 withdrawing direction (relative rotational displacement in which the spool 4 is rotated counterclockwise assuming that the locking base 14 is a fixed side in Fig. 3) comes about from a locked state in which the cam pin 15b enters the lead-in groove 14b and causes the main pawl 13R to project from the spool 4 toward the outer peripheral side by the operation of the pretensioner 11 at the time of sudden deceleration of a vehicle as described later, the cam pin 15b is transferred from the lead-in groove 14b to the circumferential groove 14a on the outer peripheral side as shown in Fig. 3(b), thereby rotating the main pawl 13R toward the inner peripheral side of the spool 4. When the spool 4 achieves the relative rotational displacement of the above-described predetermined amount T in the seatbelt 3 withdrawing direction with respect to the locking base 14, the main pawl 13R is stored completely in the inner peripheral side of the spool 4 as shown in Fig. 3(c) to achieve the unlocked state.

As described above, the main pawl 13R can be freely switched between the locked state and the unlocked state by the operation of the operating pin 13Ra by the lock activation mechanism 6 in the normal state (including the time of gentle deceleration of the vehicle, hereinafter), and when the pretensioner 11 is operated at the time of sudden deceleration of the vehicle, the relative rotational displacement is generated between the locking base 14 and the spool 4 to forcedly bring the main pawl 13R into the unlocked state, so that the lock of the spool 4 with respect to the frame 2 can be released.

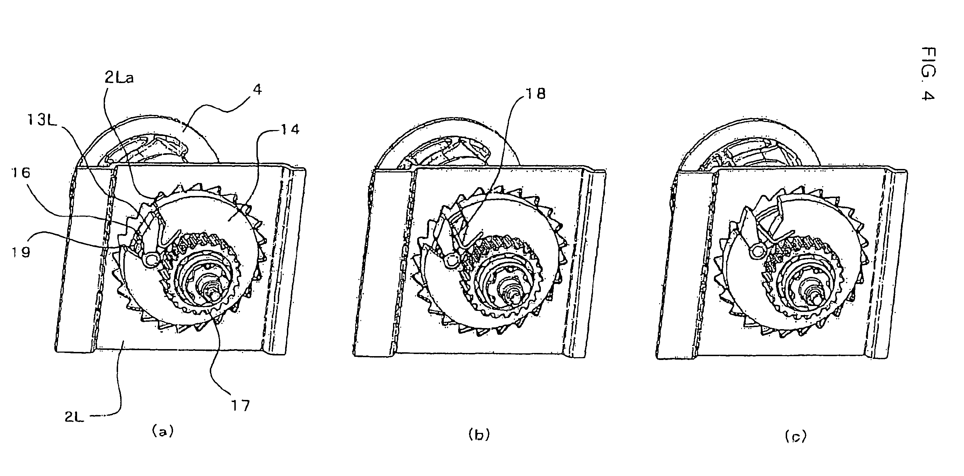

Fig. 4 is a drawing for describing the structure of the sub pawl 13L on the locking base 14 side, in which Fig. 4(a) is a drawing showing the sub pawl 13L in the unlocked state, Fig. 4(b) is a drawing showing the sub pawl 13L in a state between the unlocked state and the locked state, and Fig. 4(c) is a drawing showing the sub pawl 13L in the locked state.

In Fig. 4, internal teeth 2La with which the sub pawl 13L in the locked state can engage are formed on the side wall 2L of the frame 2 which supports the locking base 14 (although not specifically shown, similar internal teeth are formed on the side wall 2R of the frame 2 which supports the spool 4). A pinion 17 for transmitting torque is fixed to the locking base 14 and the rotational drive torque of the pretensioner 11 is transmitted to the pinion 17.

The locking base 14 is provided with a spring member 18 in an arrangement in which an urging force is constantly applied to the sub pawl 13L toward the outer peripheral side of the locking base 14, and the shear pin 16 formed so as to project from the axially other side of the spool 4 (left side in Fig. 2 and near side in Fig. 4) is passed through a through hole 19 of the locking base 14 and is engaged with the sub pawl 13L so as to work against the urging force applied by the above-described spring member 18. The material and the shape of the shear pin 16 are such that it is sheared according to an applied load, and is set to have a shearing strength which resists the urging force applied by the spring member 18 but causes shearing by the rotational drive force of the locking base 14 of the pretensioner 11.

The through hole 19 is formed into a shape such that when the predetermined amount T of the relative rotational displacement comes about between the locking base 14 and the spool 4 described above, the movement of the shear pin 16 is allowed by the same amount (rotational angle), so that the relative rotational displacement between the locking base 14 and the spool 4 described above and the rotation of the main pawl 13R are not impaired. The movement of the shear pin 16 only causes the sub pawl 13L to rotate slightly toward the outer peripheral side of the locking base 14. In other words, the locked state in which the sub pawl 13L is engaged with (meshed with) the internal teeth 2La of the side wall 2L of the frame 2 to restrict the rotation of the locking base 14 is not achieved unless the shear pin 16 is sheared as described later. The engagement of the shear pin 16 with respect to the sub pawl 13L may also be such that an engaging hole is formed on a surface (a surface on the back side in Fig. 4) of the sub pawl 13L on the spool 4 side for inserting or engaging the shear pin 16 into/with the engaging hole in addition to the structure in which the shear pin 16 is engaged with the sub pawl 13L by bringing the same into contact with the outer side surface thereof as shown in the drawing.

The behavior of the sub pawl 13L is specifically such that the shear pin 16 maintains the unlocked state in which the sub pawl 13L is stored in the inner peripheral side of the locking base 14 against the urging force applied by the spring member 18 in a state in which the shear pin 16 is not sheared as shown in Fig. 4(a). When the locking base 14 is rotationally driven in the retracting direction by the operation of the pretensioner 11 from this state so that when the relative rotational displacement of at least the predetermined amount T is generated between the locking base 14 and the spool 4, as shown in Fig. 4(b), the shear pin 16 is sheared and hence broken, and the sub pawl 13L is rotated toward the outer peripheral side of the locking base 14 by the urging force applied by the spring member 18. As shown in Fig. 4(c), the locked state in which the sub pawl 13L is engaged with the internal teeth 2La of the side wall 2L on the outer peripheral side with respect to the locking base 14 is achieved.

In the description above, the main pawl 13R, the sub pawl 13L, the camshaft 15 including the cam pin 15b and the coupling plate 15a, the circumferential groove 14a, the lead-in groove 14b, the shear pin 16 and the spring member 18 constitute a relay locking mechanism for locking the spool 4 with respect to the fixed-side member of the vehicle to restrain the rotation thereof in the seatbelt 3 withdrawing direction in the normal state and for locking the spool 4 with respect to the fixed-side member so as to release the locking thereof and restrain the rotation of the torsion bar 7 in the seatbelt 3 withdrawing direction on the axially other side of the torsion bar 7 in a state of sudden deceleration of the vehicle as described in the respective claims.

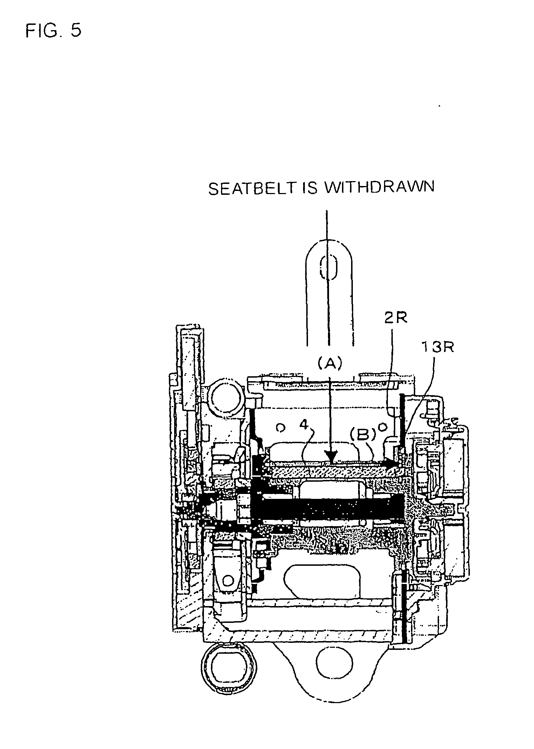

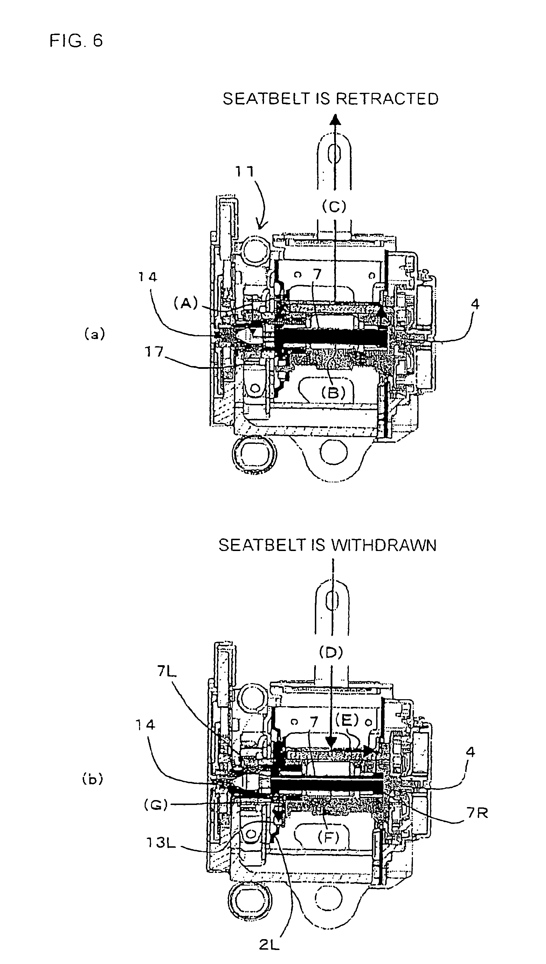

Referring now to Fig. 5 and Fig. 6, an operation and the effects of the seatbelt retractor 1 according to the first embodiment, which is configured as described above, will be described below. The arrows shown in Fig. 5 and Fig. 6 represent a route of application of the load.

Fig. 5 is a drawing for explaining the operation and the effects of the seatbelt retractor 1 in the normal state. As shown in Fig. 5, in the normal state, the cam pin 15b is positioned within the circumferential groove of the locking base 14 and hence the main pawl 13R is in the unlocked state, the shear pin 16 is substantially in the unsheared state in which the shear pin 16 is not sheared, and the sub pawl 13L is in the unlocked state. Therefore, the locking base 14, the torsion bar 7 and the spool 4 are integrally rotatable freely. When the seatbelt 3 is not worn, the seatbelt 3 is completely retracted by the urging force applied by the spiral spring 5.

When the seatbelt 3 is withdrawn in the normal speed for wearing the same (see (A) in Fig. 5), the spool 4 is rotated in the seatbelt 3 withdrawing direction, and the seatbelt 3 is withdrawn smoothly. After a tongue, not shown, provided slidably on the seatbelt 3 is inserted into and engaged with the buckle fixed to the vehicle body, the seatbelt 3 withdrawn excessively is retracted by the spool 4 by the urging force applied by the spiral spring 5, and the seatbelt 3 is fitted to the passenger to an extent that does not make the passenger feel an uncomfortable constraint.

When an attempt is made suddenly to withdraw the seatbelt 3, the above-described deceleration sensing means is activated by a large deceleration occurred at this time, and upon the activation of the deceleration sensing means, the above-descried lock activation mechanism 6 rotates the main pawl 13R to be engaged with the internal teeth of the side wall 2R of the frame 2 as described above. By the engaging operation of the main pawl 13R as described above, the spool 4 is locked by the frame 2 (see (B) in Fig. 5), and the rotation in the seatbelt 3 withdrawing direction is constrained. In this case, only the spool 4 is locked, and the locking base 14 and the torsion bar 7 are simply stopped without being applied with a load.

Fig. 6 is a drawing for explaining the operation and the effects of the seatbelt retractor 1 at the time of sudden deceleration of the vehicle. As shown in Fig. 6, at the time of sudden deceleration of the vehicle such as a case of emergency, the pretensioner 11 is activated according to the sudden deceleration, the rotational drive force is transmitted to the locking base 14 via the pinion 17 (see (A) in Fig. 6(a)), and the rotational drive force is transmitted to the spool 4 via the torsion bar 7 (see (B) in Fig. 6(a)), so that the spool 4 rotates a certain predetermined amount in the seatbelt 3 withdrawing direction (see (C) in Fig. 6(a), and hence the force of constraint of the seatbelt 3 with respect to the passenger is improved.

In a first stage immediately after the sudden deceleration of the vehicle, since a rotational displacement in which the locking base 14 rotates relatively ahead of the spool 4 in the seatbelt 3 retracting direction by the rotational drive of the pretensioner 11 (that is, when viewed from the spool 4, the rotational displacement in which the spool 4 is rotated relatively ahead of the locking base 14 in the seatbelt 3 withdrawing direction) comes about, the main pawl 13R is rotated into the inner peripheral side of the spool 4 and is brought into the unlocked state as described above (see Fig. 3(c)).

When the relative rotational displacement of the locking base 14 with respect to the spool 4 comes about by the rotational drive of the pretensioner 11 by at least the predetermined amount T, the shear pin 16 is sheared and broken as described above, and the sub pawl 13L is brought into the locked state of being engaged with the internal teeth 2La of the side wall 2L on the outer peripheral side with respect to the locking base 14 by the urging force applied by the spring member 18 (see Fig. 4(c)), and the locking base 14 is locked by the side wall so that the rotation in the seatbelt 3 withdrawing direction is restricted.

Subsequently, in a second stage, the seatbelt 3 is pulled by the passenger's body on the vehicle by the inertia at the time of sudden deceleration of the vehicle by a force of at least a predetermined strength (see (D) in Fig. 6(b)), and a force is significantly applied to the spool 4 in the seatbelt 3 withdrawing direction (see (E) in Fig. 6(b)). However, since the main pawl 13R on the spool 4 side is already in the unlocked state as described above at this moment, a portion 7R of the torsion bar 7 coupled to the spool 4 on the axially one side (right side in Figs. 6(a) and (b)) is rotationally displaced relatively with respect to a portion 7L (fixed to the locking base 14 locked by the sub pawl 13L as described above at this moment(see (G) in Fig. 6(b)) thereof on the axially other side (left side in Figs. 6(a) and (b)), and the passenger's kinetic energy is absorbed by the torsional deformation (torsional torque) of the torsion bar 7 (see (F) in Fig. 6(b)) to limit a load applied to the seatbelt 3 (EA mechanism).

At this time, since the pretensioner 11 is located on the axially other side of the spool 4 (left side in Figs. 6(a) and (b)) as described above and is coupled to the locking base 14, the operation of the EA mechanism in which the portion 7R on the one side (right side in Figs. 6(a) and (b)) of the torsion bar 7 is twisted and hence relatively rotated with respect to the portion 7L on the other side (left side in Figs. 6(a) and (b)) in the manner described above is reliably stabilized without being affected by the operation of the above-described pretensioner 11.

As described above, in the seatbelt retractor 1 in the first embodiment, the spool 4 to be coupled to axially one side of the torsion bar 7 is locked in the normal state, and only the axially other side of the torsion bar 7 is locked for causing the torsional deformation of the torsion bar 7 at the time of sudden deceleration of the vehicle for releasing the one side thereof in the axial direction and the spool 4 to be coupled thereto. Therefore, the stable EA operation without being affected by the operation of the pretensioner 11 can be secured.

The present invention is not limited to the above-described first embodiment, and various modifications can be made without departing from the scope and technical range of the invention. For example, it is also possible to lock the locking base 14 for a required duration by the rotational drive force of the pretensioner 11 without using the sub pawl 13L when locking the locking base 14 at the time of sudden deceleration of the vehicle.

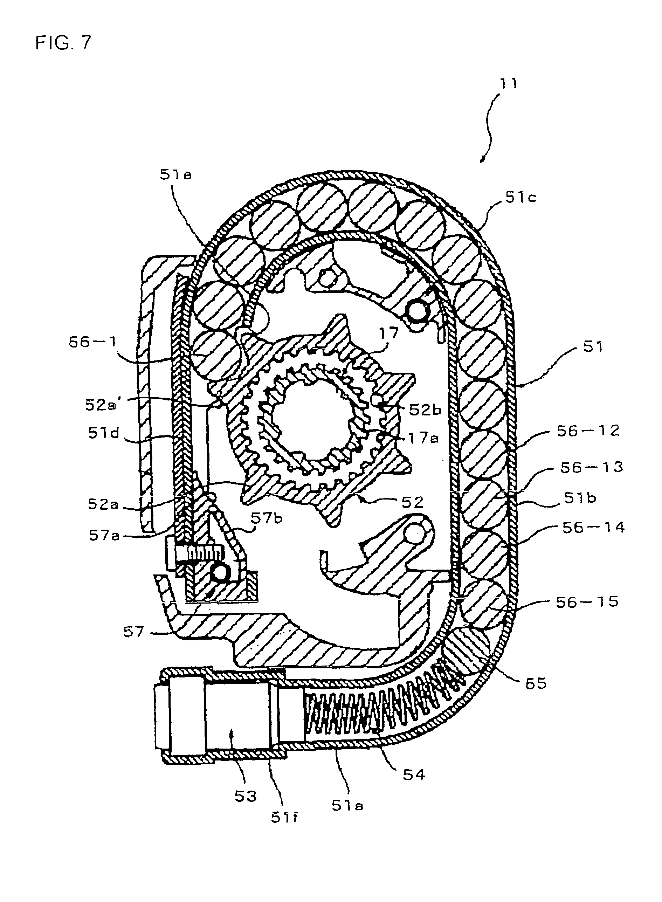

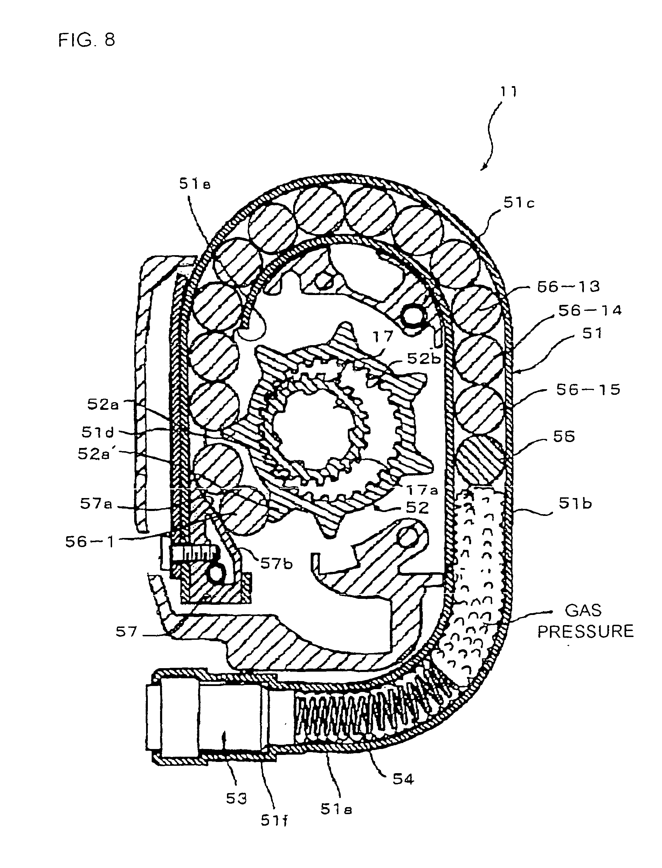

Fig. 7 and Fig. 8 are cross-sectional views of the pretensioner 11 taken along the cross section VII-VII in Fig. 2 for explaining the structure of the modification as described above. Fig. 7 is a drawing showing a state of the pretensioner 11 before operation and Fig. 8 is a drawing showing a state of the pretensioner 11 immediately after the operation. In Fig. 7 and Fig. 8, the pretensioner 11 includes a pipe (conduit) 51 mounted to the outside of the side wall 2L of the frame 2 curved into substantially the C-shape, a ring gear 52 arranged on the inner peripheral side of the pipe 51, a gas generator 53 provided at a proximal end (the lower end in Fig. 7 and Fig. 8) 51a of the pipe 51, a coil spring 54 connected to the gas generator 53 in the pipe 51, a single piston ball 55 arranged so as to come into contact with the coil spring 54 in the pipe 51, a plurality of balls 56 (fifteen in this example) arranged from the piston ball 55 in sequence while closing up toward the gas generator 53 in the pipe 51, and a guide block 57 mounted in an end portion of the pipe 51 opposite from the proximal end 51a thereof.

The pipe 51 is formed, for example, by bending a steel pipe into substantially the C-shape which is close to an oval shape, and is mounted to a portion between the side wall 2L of the frame 2 and a pretensioner cover 11a in a sandwiched manner (see Fig. 2). The pipe 51 is curved from the proximal end 51a on the lower side of Fig. 7 and Fig. 8 rightward and upward by about 90 degrees and is continued to a straight portion 51b, and then is continued to a semi-circular section 51c on the upper side of Fig. 7 and Fig. 8. An extremity of the semi-circular section 51c is continued to a straight portion 51d extending downward in Fig. 7 and Fig. 8, and a notched portion 51e is formed on a side surface of the straight portion 51d on the inner peripheral side. External teeth 52a (external teeth 52a' described later) of the ring gear 52 get into the inner peripheral side of the notched portion 51e.

The ring gear 52 is retained at a fixed position on the inner peripheral side of the pipe 51 by a plurality of shear pins (not shown) formed on the resin-made pretensioner cover 11a (see Fig. 2). In addition, a pinion 17 fixed to the above-described locking base 14 is arranged on the inner peripheral side of the ring gear 52.

An inner peripheral surface of the ring gear 52 is formed with internal teeth 52b which can mesh with external teeth 17a of the pinion 17. Since the inner diameter of the ring gear 52 is formed to be larger than the outer diameter of the pinion 17, in the state before the operation shown in Fig. 7, a sufficient clearance is secured between the internal teeth 52b of the ring gear 52 and the external teeth 17a of the pinion 17 so that both can be apart from each other without engagement. Therefore, in the normal state, the spool 4 can be rotated freely irrespective of the existence of the pretensioner 11. This is a state in which a clutch mechanism composed of the ring gear 52 and the pinion 17 is in the disconnected state.

An outer peripheral surface of the ring gear 52 is formed with a plurality of (seven in the example in the drawing) external teeth 52a each having a shape of a projection protruding outward. The respective external teeth 52a are arranged along the circumference direction of the ring gear 52 at intervals each having a spacing that can accommodate two balls 56 except for two adjacent external teeth 52a' which are offset to have a spacing therebetween that can accommodate only one ball 56 at one point thereof. In the state before the operation shown in Fig. 7, the offset two external teeth 52a' get into the notched portion 51e on the straight portion 51d of the pipe 51, and the ball 56 at the forefront in the pipe 51 is sandwiched between these two external teeth 52a' in contact with each other.

A gas generator storage section 51f that is slightly thicker than the pipe 51 is formed at the proximal end 51a of the pipe 51. The gas generator 53 is stored in the storage section 51f. The gas generator 53 is stored in the gas generator storage section 51f, and then fixed thereto by crimping a flange portion from the outside. The gas generator 53 ignites gunpowder according to the signal emitted from sudden deceleration sensing means, not shown, at the time of sudden deceleration of the vehicle such as the case of emergency, and supplies an injection gas pressure into the pipe 51 as shown in Fig. 8. The pipe 51 is configured to have a high air-tightness that can prevent the injection gas from leaking from the gas generator storage section 51f at the proximal end 51a to the notched portion 51e at the other end.

In a state before the operation of the pretensioner 11 shown in Fig. 7, the coil spring 54, the piston ball 55 and fifteen balls 56 are stored in the pipe 51 in sequence from the gas generator 53 side. The balls 56 are spherical members formed of metal such as steel. The outer diameter of each ball 56 is slightly smaller than the inner diameter of the pipe 51, so that it can move relatively smoothly in the pipe 51. A forefront ball 56-1 is in contact with the offset two external teeth 52a' of the ring gear 52.

The piston ball 55 is formed of resin such as silicone rubber. The piston ball 55 can be slid hermetically along an inner surface of the pipe 51 by being deformed and expanded after discharge of the injection gas, and hence can serve also as a seal which prevents gas from leaking toward the forefront side. In a state before the operation of the pretensioner 11 shown in Fig. 7, the coil spring 54 is arranged between the gas generator 53 and the piston ball 55, and applies an urging force to the piston ball 55 in the direction toward an opposite end of the pipe 51. The forefront ball 56-1 comes into contact with the offset two external teeth 52a' of the ring gear 52 by the urging force applied by the coil spring 54.

A guide block 57 is mounted to an end of the straight portion 51d of the pipe 51. The guide block 57 is formed into a column shape with a distal end cut in an oblique direction. The oblique surface serves as a guide surface. The guide surface includes a first guide surface 57a and a second guide surface 57b. The first guide surface 57a is formed into an arcuate shape being substantially concentric with the ring gear 52 at an upper end portion of the guide block 57, and the ball 56 injected from the pipe 51 hits thereto when the pretensioner 11 is operated. On the other hand, the second guide surface 57b is formed into a planer shape and is formed so as to be separated gradually from the ring gear 52.

In the description shown above, the ring gear 52 and the pinion 17 constitute driving means, including a series of the plurality of balls 55, 56 arranged in the pipe 51 and accelerated by gas and the clutch to be coupled to the torsion bar 7 on the axially other side, for converting the movement of the accelerated balls 55, 56 into a force for rotating the torsion bar 7.

Subsequently, the operation of the pretensioner 11 having the above-described structure will be described. In the pretensioner 11 is not in operation (normal state) shown in Fig. 7, the ring gear 52 is retained at a fixed position on the side of the inner periphery of the pipe 51 by the plurality of shear pins, not shown, formed on a resin-made pretensioner cover 11a (see Fig. 2), and the ring gear 52 and the pinion 17 are not meshed with respect to each other. Therefore, the locking base 14 can rotate freely irrespective of the pretensioner 11.

Thereafter, when the state of collision of the vehicle is detected, a signal is transmitted to the gas generator 53. With this signal, the gas generator 53 is ignited and the injection gas pressure is supplied into the pipe 51 as shown in Fig. 8. The piston ball 55 which is the nearest to the gas generator 53 is pressed first by this injection gas pressure, and then the plurality of balls 56 are pressed in sequence by the pressing force from the piston ball 55. Then, the pressing force is transmitted to the frontmost ball 56-1 (the ball which is in contact with the two external teeth 52a' of the ring gear 52). Since the piston ball 55 is deformed and expanded by the gas pressure at this time, a sealing function is generated with respect to an inner surface of the pipe 51, and hence the gas does not escape toward the forefront side. Since the pipe 51 is configured to have a high air-tightness, the injection gas for driving the balls 56 by the piston ball 55 does not escape on the way, and power loss of the pretensioner 11 is prevented.

When the pressing force is applied to the ring gear 52 by the pressing force of the balls 56, the shear pin (not shown) of the pretensioner cover 11a is sheared, and hence the ring gear 52 is disengaged and moved toward the pinion 17 side, then, the internal teeth 52b of the ring gear 52 and the external teeth 17a of the pinion 17 are engaged, thereby being brought into a state in which the clutch is coupled. The ring gear 52 rotates about a coaxial core by a force of the balls 56 pressing the external teeth 52a. At the time before the ring gear 52 starts moving, the forefront ball 56-1 is in contact with the external teeth 52a' of the ring gear 52 in a posture of giving the same a rotational force, and hence the ring gear 52 starts rotating reliably.

Furthermore, when the balls 55, 56 are pressed out in sequence upon reception of the injection gas pressure, the respective balls 56 engage between troughs of the external teeth 52a of the ring gear 52 in sequence. In this case, two balls 56 each engage with one trough of the ring gear 52. By the sequential engagement of these balls 56, the ring gear 52 rotates counterclockwise in Fig. 8. Since the external teeth 17a of the pinion and the internal teeth 52b of the ring gear mesh with each other, the rotation of the ring gear 52 is transmitted to the pinion 17, and hence both of them rotate in conjunction with each other. Since the pinion 17 is fixed to the locking base 14, the locking base 14 is rotationally driven together with the pinion 17. The state of the pretensioner 11 immediately after the operation thereof shown in Fig. 8 is shown by way of example, and the position of the piston ball 55 in the pipe 51 varies depending on the relation between the physical construction or the posture or the like of the passenger and the seatbelt 3.

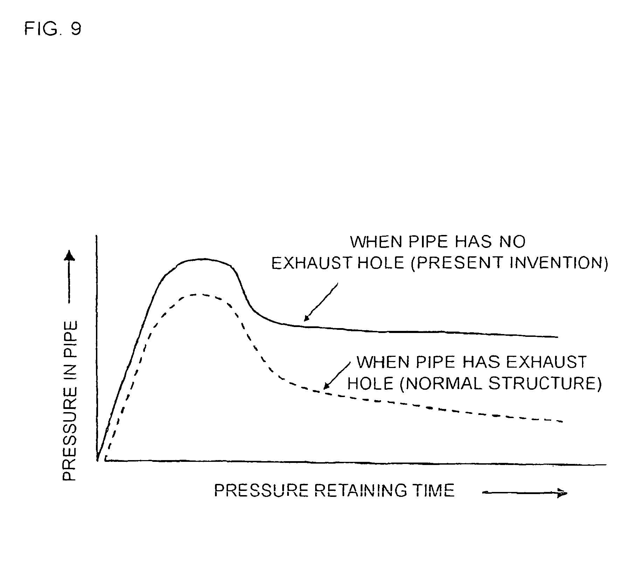

Here, by the operation of the EA mechanism by the torsional deformation of the above-described torsion bar 7, an impact applied by the seatbelt 3 to the passenger is absorbed and alleviated. Then, the injection gas pressure in the pipe 51 is sufficiently maintained for a certain time after the operation of the EA mechanism (the period in which the operation of the EA mechanism is required), and the drive force of the locking base 14 in the retracting direction is maintained. In other words, when the EA mechanism is in operation, the rotation in the seatbelt 3 withdrawing direction is locked by the locking base 14. Fig. 9 is a drawing showing the behavior in which the injection gas pressure is maintained, and shows pressure characteristics of the pretensioner 11 in this modification. A case in which a gas releasing hole is provided for smoothing the EA operation as stated in the above-described Japanese Unexamined Patent Application Publication No.2002-120603 is also shown for comparison. As seen from the drawing, in this modification, since the gas releasing hole is not provided on the pretensioner 11, the injection gas pressure in the pipe 51 is maintained for a while after the operation of the EA mechanism.

As described above, in the same manner as in the above-described first embodiment, when the pretensioner 11 is activated at the time of sudden deceleration of the vehicle, the rotational drive force in the seatbelt 3 retracting direction is applied to the axially other side of the torsion bar 7 via the locking base 14 and such to maintain the restraint of the rotation of the other side of the locking base 14 and the torsion bar 7 in the seatbelt 3 withdrawing direction for a certain time period until the injection gas pressure in the pipe 51 is lowered in this modification as well. Accordingly, the rotation of the locking base 14 and the torsion bar 7 on the axially other side in the seatbelt 3 withdrawing direction at the time of sudden deceleration of the vehicle can be restricted by the operation of the pretensioner 11 in itself without the provision of the sub pawl 13L on the locking base 14, simplification of the structure of the seatbelt retractor and reduction of the number of components can be achieved.

As another modification, for example, a centrifugal pawl can be used as a sub pawl for locking the locking base 14 at the time of sudden deceleration of the vehicle.

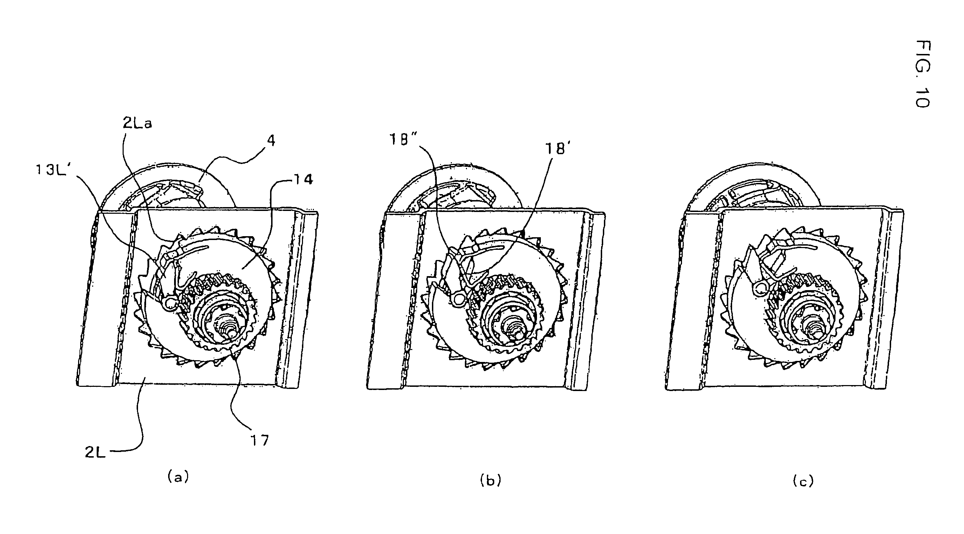

Fig. 10 is a drawing for explaining a configuration in which the centrifugal pawl is provided on the locking base 14, in which Fig. 10(a) is a drawing showing the centrifugal pawl in the unlocked state; Fig. 10(b) is the centrifugal pawl between the unlocked state and the locked state; and Fig. 10(c) is a drawing showing the centrifugal pawl in the unlocked state.

In Fig. 10, a centrifugal pawl 13L' is swingably held on the locking base 14, and the locking base 14 is provided with a locking spring member 18' for applying an urging force to the centrifugal pawl 13L' toward the outer periphery side of the locking base 14 and an unlocking spring member 18" to be engaged with a distal end of the centrifugal pawl 13L' for applying an urging force to the centrifugal pawl 13L' toward the inner periphery side of the locking base 14.

The centrifugal pawl 13L' in itself is formed of a material such as metal and has a sufficient mass. An urging force applied to the centrifugal pawl 13L' by the unlocking spring member 18" is adapted to be slightly larger than an urging force applied thereto by the locking spring member 18'. Therefore, in the state in which the locking base 14 is not rotating or in the state in which the locking base 14 is rotated to an extent of the normal state including the gentle deceleration of the vehicle, a resultant force of the urging force applied by the locking spring member 18' and the centrifugal force applied to the centrifugal pawl 13L' itself (both of these forces are applied in the direction toward the outer periphery side of the locking base 14) is smaller than the urging force applied by the unlocking spring member 18", and the unlocking spring member 18" is continuously engaged with the centrifugal pawl 13L' and maintains the centrifugal pawl 13L' in the unlocked state (see Fig. 10(a)).

When the sudden rotational drive force is applied to the locking base 14 by the operation of the pretensioner 11, the centrifugal force applied to the centrifugal pawl 13L' in itself is abruptly increased correspondingly, and the resultant force of its centrifugal force and the urging force applied by the locking spring member 18' overcome the urging force applied by the unlocking spring member 18", so that the centrifugal pawl 13L' is disengaged from the unlocking spring member 18" (see Fig. 10(b)). Thereafter, the centrifugal pawl 13L' is brought into the locked state by being engaged with the internal teeth on the side wall on the outer peripheral side with respect to the locking base 14 by the above-described resultant force (see Fig. 10(c)).

In this manner, even in this modification, when the pretensioner 11 is operated when at the time of sudden deceleration of the vehicle, the rotation of the axially other sides of the locking base 14 and the torsion bar 7 in the seatbelt 3 withdrawing direction can be restricted as in the case of the above-described first embodiment.

The seatbelt retractor according to a second embodiment of the present invention will be described below.

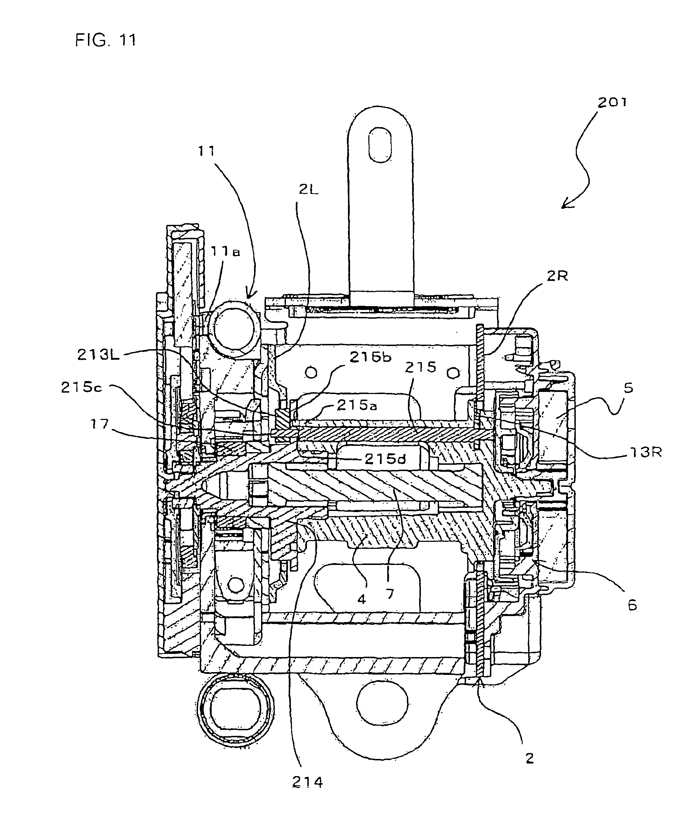

Fig. 11 is a vertical cross-sectional view showing a general schematic structure of a seatbelt retractor 201 according to the second embodiment. The same parts as those in the above-described first embodiment are represented by the same reference numerals and the description thereof are omitted as needed, hereinafter.

In Fig. 11, a sub pawl 213L is arranged at the same circumferential position as the main pawl 13R about the axis of the torsion bar 7 and an extremity 215c of a camshaft 215 extending from the rotation axis of the main pawl 13R is passed through a locking base 214 and connected to the rotational center of the sub pawl 213L. The locking base 14 is provided with the spring member 18 at a position where the spring member 18 can apply an urging force constantly to the sub pawl 213L toward the outer periphery side of the locking base 214 (see Fig. 4) in the same manner as the first embodiment described above.

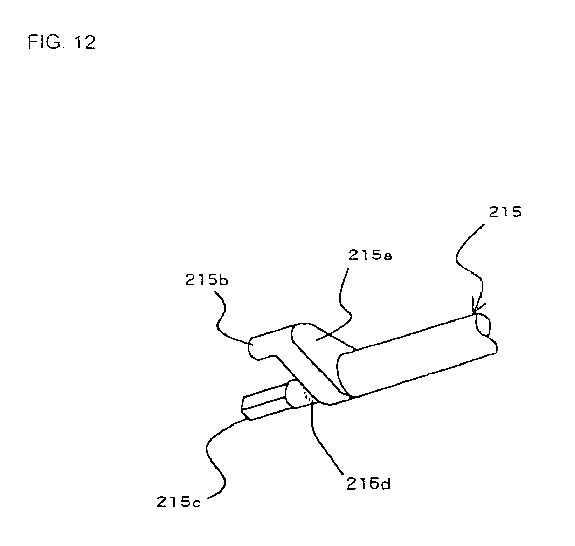

The extremity 215c of the camshaft 215 is formed so as to assume a square shape in lateral cross-section at a portion fitted to the sub pawl 213L shown in Fig. 12, and the sub pawl 213L rotates integrally with the main pawl 13R by being fitted and coupled tightly to the fitting portion of the extremity 215c. At this time, the main pawl 13R and the sub pawl 213L are interlocked in such a manner that the main pawl 13R is in the unlocked state, the sub pawl 214L is also in the unlocked state, and when the main pawl 13R is in the locked state, the sub pawl 213L is in the locked state.

With this coupling, as long as a presumptive shearing portion 215d of the camshaft 215 is not sheared as described later, the locking base 214, the torsion bar 7 and the spool 4 rotate integrally and serve as "spool means" for retracting/withdrawing the seatbelt 3. The camshaft 215 is also provided with a coupling plate 215a and a cam pin 215b which are the same as the camshaft in the above-described first embodiment.

Then, the extremity 215c of the camshaft 215 is provided with the presumptive shearing portion 215d which is to be sheared at a predetermined timing according to the load applied thereto in the vicinity of the coupling plate 215a on the side of the sub pawl 213L. The presumptive shearing portion 215d of the camshaft 215 is set to a shearing strength on the basis of the shape or the material in advance so that the balance with the drive torque which is generated by the pretensioner 11 results in the shearing behavior in a mode described later.

In the description above, the camshaft 215 constitutes a shear shaft provided so as to penetrate through the locking base 214 and the spool 4 in the axial direction as a common rotation axis which is coupled respectively to the sub pawl 213L and the main pawl 13R, and is provided with the presumptive shearing portion 215d which is to be sheared according to the load applied thereto.

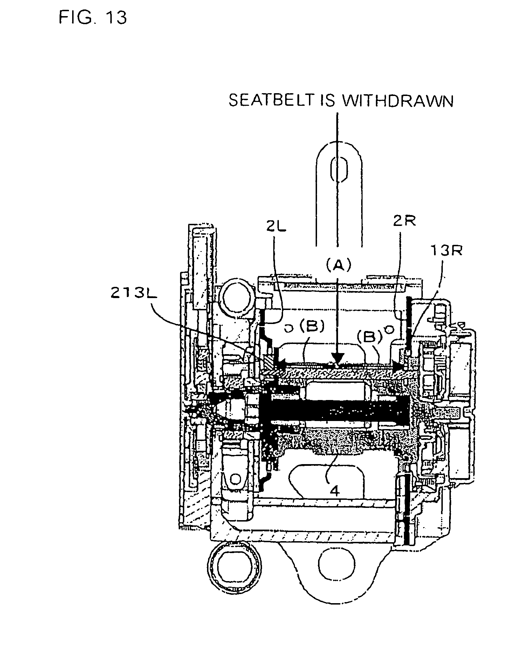

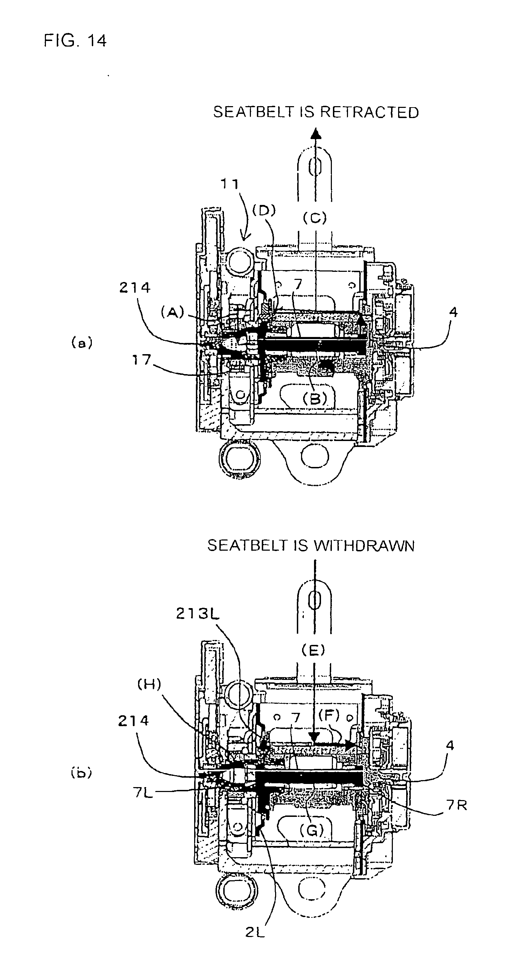

Referring now to Fig. 13 and Fig. 14, an operation and the effects of the seatbelt retractor 201 in the second embodiment with the configuration as described above will be described below. Arrows shown in Fig. 13 and Fig. 14 indicate a route that the load is applied.

Fig. 13 is a drawing explaining the operation and the effects of the seatbelt retractor 201 in the normal state. As shown in Fig. 13, in the normal state, the cam pin 215b is located within the circumferential groove of the locking base 214, and the presumptive shearing portion 215d of the camshaft 215 is in the substantially unsheared state, which is a state of not being shared, both of the main pawl 13R and the sub pawl 213L are in the unlocked state, so that the locking base 14, the torsion bar 7 and the spool 4 are integrated and are free to rotate. When the seatbelt 3 is not worn, the seatbelt 3 is completely retracted with the urging force applied by the spiral spring 5.

When the seatbelt 3 is withdrawn at the normal speed to wear (see (A) in Fig. 13), the spool 4 is rotated in the seatbelt 3 withdrawing direction, and hence the seatbelt 3 is smoothly withdrawn. After the tongue slidably provided on the seatbelt 3, not shown, is inserted into and engaged with the buckle which is fixed to the vehicle body, the seatbelt 3 which is excessively withdrawn is retracted by the spool 4 by the urging force applied by the spiral spring 5, and hence the seatbelt 3 fits the passenger to an extent that does not make him/her feel an uncomfortable constraint.

When an attempt is made to retract the seatbelt 3 abruptly, the above-described lock activation mechanism 6 rotates the main pawl 13R toward the outer periphery side of the spool 4, and the sub pawl 213L is moved in conjunction therewith, whereby they engage with the internal teeth of the side walls 2R, 2L of the frame 2, respectively by the operation of the deceleration sensing means. With the engaging operation of the main pawl 13R and the sub pawl 213L as described above, the spool 4 and the locking base 214 are locked with the side walls 2R, 2L of the frame 2 (see (B) in Fig. 13) respectively, whereby the rotation of the seatbelt 3 withdrawing direction is restricted. In the operation in the normal state described above, since the urging force is constantly applied to the sub pawl 213L by the spring member 18, an urging force is always applied both to the sub pawl 213R and the main pawl 13R interlocked therewith so as to bring the same in the locked state. However, the lock activation mechanism 6 controls to achieve the adequate rotation by working against the urging force applied thereto via the operating pin 13Ra.

Fig. 14 is a drawing for explaining the operation and the effects of the seatbelt retractor 201 at the time of sudden deceleration of the vehicle. As shown in Fig. 14, at the time of sudden deceleration of the vehicle, such as in the case of emergency, the pretensioner 11 is activated in response to the sudden deceleration, the rotational drive force is transmitted to the locking base 214 via the pinion 17 (see (A) in Fig. 14(a)), and the rotational drive force is transmitted to the spool 4 via the torsion bar 7 (see (B) in Fig. 14(a)), the spool 4 is rotated by a predetermined amount to the seatbelt 3 retracting direction (see (C) in Fig. 14(a)) to improve a force of constraint of the seatbelt 3 with respect to the passenger. At this time, the presumptive shearing portion 215d of the above-described camshaft 215 is sheared at the time of sudden deceleration of the vehicle (see (D) in Fig. 14(b)) by the rotational drive force of the pretensioner 11 to release interlocking/coupling between the above-described main pawl 13R on the one side (right side in Figs. 14(a) and (b)) and the sub pawl 213L on the other side (left side in Figs. 14(a) and (b)), thereby releasing connection between the spool 4 and the locking base 214.

Then, the passenger's body pulls the seatbelt 3 by a large force exceeding a predetermined value by inertia in case of the sudden deceleration of the vehicle (see (E) in Fig. 14(b)), and a large force is applied to the spool 4 in the seatbelt withdrawing direction (see (F) in Fig. 14(b)). As described above, since the presumptive shearing portion 215d of the camshaft 215 is already sheared at this time, the locked state in which the sub pawl 213L comes into engagement with the internal teeth 2La of the side wall 2L on the outer peripheral side with respect to the locking base 214 by the urging force applied by the spring member 18 (see Fig. 4(c)), so that the locking base 214 is locked by the side wall and hence the rotation of the seatbelt 3 withdrawing direction is restricted.

Then, when the seatbelt 3 is withdrawn, the withdrawing torque is transmitted to the locking base 214 (see (G) in Fig. 14(b)) via the torsion bar 7, whereby a rotational displacement in which the spool 4 is rotated relatively ahead of the locking base 214 in the seatbelt 3 withdrawing direction comes about, and hence the main pawl 13R is rotated into the inner peripheral side of the spool 4 and is brought into the unlocked state (see Fig. 3(c)) by the operation of the cam mechanism described in detail in conjunction with the first embodiment.

As a consequence, the portion 7R on the axially one side (right side in Figs. 14(a) (b)) of the torsion bar 7 on one side coupled to the spool 4 is rotationally displaced relatively with respect to the portion on the axially other side (which is fixed to the locking base 214 locked by the sub pawl 13L as described above at this time point, see (H) in Fig. 14(b)), and this torsional deformation of the torsion bar 7 (torsional torque) absorbs the passenger's kinetic energy, thereby restricting the load applied to the seatbelt 3 (EA mechanism).

At this time, since the pretensioner 11 is located on the axially other side (left side in Figs. 14(a) and (b)) of the spool 4 as described above and is coupled to the locking base 214, the operation of the EA mechanism in which the portion 7R of the torsion bar 7 on one side (right side in Figs. 14(a) and (b)) is twisted and rotated relatively with respect to the portion 7L (left side in Figs. 14(a) and (b)) on the other side is stabilized without being affected by the operation of the above-described pretensioner 11.

In the manner described above, the seatbelt retractor 1 according to the second embodiment locks both of the spool 4 coupled to axially one side of the torsion bar 7 and the locking base 214 coupled to the axially other side of the same in the normal state, unlocks the spool 4 on the axially one side of the torsion bar 7 for the torsional deformation of the torsion bar 7 at the time of sudden deceleration of the vehicle, and keeps only the locking base 214 on the axially other side of the same in the locked state. Therefore, a stabilized EA operation that is not affected by the operation of the pretensioner 11 is achieved.

Detailed configurations in the respective embodiments and the respective modifications described above are not intended to limit the contents of the present invention, and, as a matter of course, various modifications may be made in details within the scope of the present invention as defined by the claims.

## Claims

1. A seatbelt retractor comprising:
a spool (4) for retracting a seatbelt (3);
a torsion bar (7) arranged radially inside of the spool (4), the torsion bar (7) being coupled to the spool (4) at axially one side thereof and torsionally deformed by a relative displacement between the axially one side and the axially other side so as to be capable of absorbing passenger's kinetic energy;
a pretensioner (11) for generating a rotational drive force for rotating the spool (4) in the seatbelt retracting direction in a state of sudden deceleration of a vehicle;
**characterized in that** the pretensioner is positioned on the axially other side of the spool (4)
and **in that**
a relay locking mechanism (13R, 13L, 14a, 14b, 15, 16, 18; 11; 13L', 18', 18" ; 213L) for locking the spool with respect to a fixed-side member (2) in the vehicle so as to restrict the rotation of the spool (4) in the seatbelt withdrawing direction in the normal state and unlocking the spool (4) with respect to the fixed-side member (2) while locking the axially other side of the torsion bar (7) with respect to the fixed-side member (2) so as to restrict the rotation of the same in the seatbelt withdrawing direction in the state of sudden deceleration of the vehicle.

2. The seatbelt retractor according to Claim 1, comprising a locking member (14; 214) positioned on the axially other side of the spool (4) and connected to the axially other side of the torsion bar (7),
wherein the pretensioner (11) provides a rotational drive force for rotating the spool (4) in the seatbelt retracting direction to the locking member (14; 214) in the state of sudden deceleration of the vehicle and the relay locking mechanism includes a first locking member (13L; 13L'; 213L) for locking the locking member to the fixed-side member (2) of the vehicle.

3. The seatbelt retractor according to Claim 2, wherein the first locking member is a pawl (13L; 13L'; 213L) provided rotatably on the locking member (14; 214) for performing a locking operation with respect to the locking member (14; 214) when the relative rotational displacement comes about between the locking member (14; 214) and the spool (4).

4. The seatbelt retractor according to Claim 2 or 3, comprising a shear pin (16) provided on one of the first locking member (13L) and the spool (4) so as to be locked with respect to the other one of those, the shear pin (16) being sheared according to a load applied thereto, wherein the first locking member is a pawl (13L) which performs a locking operation with an urging force applied by a spring (18) in the direction that locks the locking member when the shear pin (16) is sheared.

5. The seatbelt retractor according to any one of Claims 2 to 4, wherein the relay locking mechanism includes a second locking member (13R) for locking the spool (4) with respect to the fixed-side member (2) of the vehicle.

6. The seatbelt retractor according to Claim 5, wherein the second locking member is a pawl (13R) rotatably provided on axially one side of the spool (4) for performing the locking operation with respect to the spool according to the deceleration of the vehicle.

7. The seatbelt retractor according to Claim 5 or 6, wherein the axially one side of the torsion bar (7) and the spool (4) are coupled so as to be capable of accepting a predetermined amount of relative rotational displacement therebetween, and in that the second locking member is a pawl (13R) for releasing the locking operation with respect to the spool (4) in a state in which the rotational displacement in which the spool (4) rotates relatively ahead of the locking member (14) in the seatbelt withdrawing direction comes about.

8. The seatbelt retractor according to any one of Claims 5 to 7, wherein the locking member (14; 214) is formed with a cam groove (14a, 14b) on a surface opposing to the spool, and the second locking member (13R) includes a camshaft (15; 215) extending from a rotation axis and a cam pin (15b; 215b) which is to be engaged with the cam groove (14a, 14b) for causing the second locking member (13R) to rotate via the camshaft (15; 215) along the cam groove (14a, 14b) when the relative rotational displacement comes about between the spool (4) and the locking member (14).

9. The seatbelt retractor according to Claim 1, wherein:
the torsion bar (7) is coupled to the spool (4) at the axially one side thereof so as to be capable of accepting a predetermined amount of relative rotational displacement and torsionally deformed by a relative displacement between the axially one side and the axially other side so as to be capable of absorbing passenger's kinetic energy;
a locking base (14) is located on the axially other side of the spool and coupled to the axially other side of the torsion bar (7);
the pretensioner (11) is positioned on the axially other side of the spool (4) for transmitting the rotational drive force for rotating the spool (4) in the seatbelt retracting direction to the locking base (14) in a state of sudden deceleration of a vehicle;
a first pawl (13L) is rotatably provided on the locking base (14) for being locked with respect to a shear pin (16) formed on the spool (4) in the normal state and shearing the shear pin (16) when a relative rotational displacement exceeding the predetermined amount comes about between the locking base (14) and the spool (4) by the operation of the pretensioner (11) to lock the locking base (14) with respect to a fixed side-member (2) of the vehicle by an urging force applied by a spring (18); and
a second pawl (13R) is rotatably provided on the axially one side of the spool (4) and provided with a cam mechanism (15, 15a, 15b) for locking the spool (4) with respect to the fixed-side member (2) of the vehicle according to a deceleration of the vehicle in the normal state and releasing the locking operation with respect to the spool (4) when a relative rotational displacement comes about between the locking base (14) and the spool (4) by the operation of the pretensioner (11),
wherein the cam mechanism includes a cam-shaft (15) extending from a rotation axis of the second pawl (13R) and a cam pin (15b) which is to be engaged with a cam groove (14a, 14b) formed on the locking base (14) for causing the second pawl (13R) to rotate via the camshaft (15) along the cam groove (14a, 14b) when a relative rotational displacement comes about between the spool (4) and the locking base (14), and causes the second pawl (13R) to rotate so as to release the locking operation with respect to the spool (4) in a state in which the rotational displacement in which the spool (4) rotates relatively ahead of the locking member (14) in the seatbelt withdrawing direction comes about.

10. The seatbelt retractor according to Claim 1, wherein:
the pretensioner (11) is positioned on the axially other side of the spool (4) for locking the axially other side of the torsion bar (7) with respect to the fixed-side member (2) so as to restrict the rotation in the seatbelt withdrawing direction thereof for a predetermined duration; and
a locking member (14) is provided for locking the spool (4) with respect to the fixed-side member (2) of the vehicle so as to restrict the rotation thereof in the seatbelt withdrawing direction in the normal state and unlocking the spool (4) with respect to the fixed-side member (2) in the state of sudden deceleration of the vehicle.

11. The seatbelt retractor according to any one of Claim 1 to 10, wherein the pretensioner (11) comprises a gas generator (53), a conduit (51) in which gas generated by the gas generator (5.3) is blown in, a series of a plurality of balls (56) arranged in the conduit (51) and accelerated by the gas; and a clutch to be coupled to the axially other side of the torsion bar, and drive means (17, 52) for converting the movement of the accelerated balls (56) into a force for rotating the torsion bar (7).

12. The seatbelt retractor according to Claim 1, wherein:
the torsion bar (7) is coupled to the spool (4) at the axially one side thereof so as to be capable of accepting a predetermined amount of relative rotational displacement and torsionally deformed by a relative displacement between the axially one side and the axially other side so as to be capable of absorbing passenger's kinetic energy;
a locking base (214) is located on the axially other side of the spool (4) and coupled to the axially other side of the torsion bar;
a first pawl (213L) is rotatably provided on the locking base (214) for locking the locking base (214) with respect to the fixed-side member (2) of the vehicle according to the deceleration of an vehicle;
a second pawl (13R) is rotatably provided on the axially one side of the spool for locking the spool with respect to the fixed-side member (2) of the vehicle according to the deceleration of the vehicle;
the pretensioner (11) is located on the axially other side of the spool (4) for generating the rotational drive force to cause the spool (4) to rotate in the seatbelt retracting direction and transmit the same to the locking base in a state of sudden deceleration of the vehicle; and
a shear shaft (215) is provided so as to penetrate through the locking base (214) and the spool (4) in the axial direction as a common rotation axis which is coupled respectively to the first pawl (213L) and the second pawl (13R), and is provided with a presumptive shearing portion (215d) which is to be sheared according to a load applied thereto,
wherein the presumptive shearing portion (215d) of the shear shaft (215) is set to have a shearing strength to maintain the substantially unsheared state so as to keep a coupled state between the first pawl (213L) and the second pawl (13R) in the normal state, and to be sheared when the pretensioner (11) is operated in the state of sudden deceleration of the vehicle on the basis of a force applied to the spool (4) to cause the same to rotate in the seatbelt retracting direction by the pretensioner (11) to release the coupled state between the first pawl (213L) and the second pawl (13R).

13. The seatbelt retractor according to Claim 12, wherein the first pawl (213L) is applied with an urging force in the locking direction of the locking base (214) by a spring when the shear shaft (215) is sheared, whereby the locking operation is achieved.

14. The seatbelt retractor according to Claim 12 or 13, wherein the second pawl (13R) releases the locking operation with respect to the spool (4) when the shear shaft (215) is sheared.

15. The seatbelt retractor according to any one of Claims 12 to 14, wherein the locking base (214) is formed with a cam groove on a surface opposing the spool, the shear shaft (215) comprises a cam pin (215b) which is to be engaged with the cam groove for causing the second pawl (13R) to be rotated via the shear shaft (215) along the cam groove when the relative rotational displacement comes about between the spool (4) and the locking base (214), and the presumptive shearing portion (215d) of the shear shaft (215) is provided on the side of the first pawl (213L) with respect to a joint portion of the shear shaft (215) with respect to the cam pin (215b).

16. A seatbelt apparatus comprising:
a seatbelt (3) for constraining a passenger;
a seatbelt retractor (1; 201) for withdrawably retracting one side of the seatbelt (3);
a tongue (104) provided on the seatbelt (3); and
a buckle device (105) for causing the passenger to wear the seatbelt (3) by being engaged with the tongue,
wherein the seatbelt retractor is the seatbelt retractor according to any one of Claims 1 to 15.

## Patentansprüche

1. Sitzgurtaufroller, umfassend:
eine Spule (4) zum Aufrollen eines Sitzgurts (3);
einen Torsionsstab (7), welcher radial innerhalb der Spule (4) angeordnet ist, wobei der Torsionsstab (7) mit der Spule (4) an axial einer Seite derselben gekoppelt ist und durch eine relative Versetzung zwischen der axial einen Seite und
der axial anderen Seite torsionsverformt wird, so dass er in der Lage ist, eine kinetische Energie eines Insassen zu absorbieren;
einen Vorspanner (11) zum Erzeugen einer Drehantriebskraft zum Drehen der Spule (4) in der Sitzgurtaufrollrichtung in einem Zustand einer plötzlichen negativen Beschleunigung eines Fahrzeugs;
**dadurch gekennzeichnet,**
**dass** der Vorspanner an der axial anderen Seite der Spule (4) positioniert ist, und
**dass** ein Schalt- bzw. Relaisarretiermechanismus (13R, 13L, 14a, 14b, 15, 16, 18; 11; 13L', 18', 18"; 213L) vorgesehen ist, um die Spule bezüglich eines festen Seitenelements (2) in dem Fahrzeug zu arretieren, um so die Drehung der Spule (4) in der Sitzgurtauszugsrichtung in dem normalen Zustand zu beschränken, und um die Arretierung der Spule (4) bezüglich des festen Seitenelements (2) zu lösen, während die axial andere Seite des Torsionsstabs (7) bezüglich des festen Seitenelements (2) arretiert wird, um so in dem Zustand einer plötzlichen negativen Beschleunigung des Fahrzeugs die Drehung derselben in der Sitzgurtauszugsrichtung zu beschränken.

2. Sitzgurtaufroller nach Anspruch 1, welcher ein Arretierelement (14; 214) umfasst, das an der axial anderen Seite der Spule (4) positioniert ist und mit der axial anderen Seite des Torsionsstabs (7) verbunden ist,
wobei der Vorspanner (11) in dem Zustand einer plötzlichen negativen Beschleunigung des Fahrzeugs dem Arretierelement (14; 214) eine Drehantriebskraft zum Drehen der Spule (4) in der Sitzgurtaufrollrichtung bereitstellt, und wobei der Schalt- bzw. Relaisarretiermechanismus ein erstes Arretierelement (13L; 13L'; 213L) umfasst, um das Arretierelement an dem festen Seitenelement (2) des Fahrzeugs zu arretieren.

3. Sitzgurtaufroller nach Anspruch 2, wobei das erste Arretierelement eine an dem Arretierelement (14; 214) drehbar vorgesehene Sperrklinke (13L; 13L'; 213L) zum Durchführen einer Arretierfunktion in Bezug auf das Arretierelement (14; 214), wenn die relative Drehversetzung zwischen dem Arretierelement (14; 214) und der Spule (4) auftritt, ist.

4. Sitzgurtaufroller nach Anspruch 2 oder 3, welcher einen Scherstift (16) umfasst, der an einem von dem ersten Arretierelement (13L) und der Spule (4) vorgesehen ist, so dass er bezüglich des anderen davon arretiert ist, wobei der Scherstift (16) gemäß einer darauf ausgeübten Last geschert wird, wobei das erste Arretierelement eine Sperrklinke (13L) ist, die eine Arretierfunktion mit einer von einer Feder (18) ausgeübten Druckkraft in der Richtung, die das Arretierelement arretiert, ausführt, wenn der Scherstift (16) geschert ist.

5. Sitzgurtaufroller nach einem der Ansprüche 2-4, wobei der Schalt- bzw. Relaisarretiermechanismus ein zweites Arretierelement (13R) zum Arretieren der Spule (4) bezüglich des festen Seitenelements (2) des Fahrzeugs umfasst.

6. Sitzgurtaufroller nach Anspruch 5, wobei das zweite Arretierelement eine an axial einer Seite der Spule (4) drehbar vorgesehene Sperrklinke (13R) zum Durchführen der Arretierfunktion in Bezug auf die Spule gemäß der negativen Beschleunigung des Fahrzeugs ist.

7. Sitzgurtaufroller nach Anspruch 5 oder 6, wobei die axial eine Seite des Torsionsstabs (7) und die Spule (4) so gekoppelt sind, dass sie in der Lage sind, einen vorherbestimmten Umfang einer relativen Drehversetzung dazwischen zuzulassen, und wobei das zweite Arretierelement eine Sperrklinke (13R) zum Lösen der Arretierfunktion in Bezug auf die Spule (4) in einem Zustand ist, in dem die Drehversetzung auftritt, bei der sich die Spule (4) dem Arretierelement (14) in der Sitzgurtauszugsrichtung relativ vorausdreht.

8. Sitzgurtaufroller nach einem der Ansprüche 5-7, wobei das Arretierelement (14; 214) mit einer Kurvennut (14a, 14b) an einer der Spule gegenüberliegenden Fläche ausgebildet ist, und wobei das zweite Arretierelement (13R) eine Nockenwelle (15; 215), die sich von einer Drehachse erstreckt, und einen Nockenstift (15b; 215b), welcher mit der Kurvennut (14a, 14b) in Eingriff zu bringen ist, umfasst, um zu bewirken, dass sich das zweite Arretierelement (13R) über die Nockenwelle (15; 215) entlang der Kurvennut (14, 14b) dreht, wenn die relative Drehversetzung zwischen der Spule (4) und dem Arretierelement (14) auftritt.

9. Sitzgurtaufroller nach Anspruch 1, wobei
der Torsionsstab (7) mit der Spule (4) an der axial einen Seite desselben so gekoppelt ist, dass er in der Lage ist, einen vorherbestimmten Umfang einer relativen Drehversetzung zuzulassen, und durch eine relative Versetzung zwischen der axial einen Seite und der axial anderen Seite torsionsverformt wird, so dass er in der Lage ist, die kinetische Energie eines Insassen zu absorbieren;
eine Arretierbasis (14) an der axial anderen Seite der Spule angeordnet ist und mit der axial anderen Seite des Torsionsstabs (7) gekoppelt ist;
der Vorspanner (11) an der axial anderen Seite der Spule (4) positioniert ist, um in einem Zustand einer plötzlichen negativen Beschleunigung eines Fahrzeugs die Drehantriebskraft zum Drehen der Spule (4) in der Sitzgurtaufrollrichtung zu der Arretierbasis (14) zu übertragen;
eine erste Sperrklinke (13L) an der Arretierbasis (14) drehbar vorgesehen ist, so dass sie in dem normalen Zustand bezüglich eines an der Spule (4) ausgebildeten Scherstifts (16) arretiert ist und dass sie den Scherstift (16) schert, wenn durch die Funktion des Vorspanners (11) eine den vorherbestimmten Umfang überschreitende relative Drehversetzung zwischen der Arretierbasis (14) und der Spule (4) auftritt, um durch eine von einer Feder (18) ausgeübte Druckkraft die Arretierbasis (14) bezüglich eines festen Seitenelements (2) des Fahrzeugs zu arretieren; und
eine zweite Sperrklinke (13R) an der axial einen Seite der Spule (4) drehbar vorgesehen ist und mit einem Nockenmechanismus (15, 15a, 15b) versehen ist, um in dem normalen Zustand die Spule (4) bezüglich des festen Seitenelements (2) des Fahrzeugs gemäß einer negativen Beschleunigung des Fahrzeugs zu arretieren und um die Arretierfunktion in Bezug auf die Spule (4) zu lösen, wenn durch die Funktion des Vorspanners (11) eine relative Drehversetzung zwischen der Arretierbasis (14) und der Spule (4) auftritt,
wobei der Nockenmechanismus eine Nockenwelle (15), die sich von einer Drehachse der zweiten Sperrklinke (13R) erstreckt, und einen Nockenstift (15b) umfasst, der mit einer an der Arretierbasis (14) ausgebildeten Kurvennut (14a, 14b) in Eingriff zu bringen ist, um zu bewirken, dass sich die zweite Sperrklinke (13R) über die Nockenwelle (15) entlang der Kurvennut (14a, 14b) dreht, wenn eine relative Drehversetzung zwischen der Spule (4) und der Arretierbasis (14) auftritt, und bewirkt, dass sich die zweite Sperrklinke (13R) so dreht, dass sie die Arretierfunktion in Bezug auf die Spule (4) in einem Zustand löst, in dem die Drehversetzung auftritt, bei der sich die Spule (4) dem Arretierelement (14) in der Sitzgurtauszugsrichtung relativ vorausdreht.

10. Sitzgurtaufroller nach Anspruch 1, wobei
der Vorspanner (11) an der axial anderen Seite der Spule (4) positioniert ist, um die axial andere Seite des Torsionsstabs (7) bezüglich des festen Seitenelements (2) zu arretieren, um so die Drehung derselben in der Sitzgurtauszugsrichtung für eine vorherbestimmte Dauer zu beschränken; und
ein Arretierelement (14) vorgesehen ist, um die Spule (4) bezüglich des festen Seitenelements (2) des Fahrzeugs zu arretieren, um so in dem normalen Zustand die Drehung derselben in der Sitzgurtauszugsrichtung zu beschränken, und um die Arretierung der Spule (4) bezüglich des festen Seitenelements (2) in dem Zustand einer plötzlichen negativen Beschleunigung des Fahrzeugs zu lösen.

11. Sitzgurtaufroller nach einem der Ansprüche 1-10, wobei der Vorspanner (11) eine Gaserzeugungseinrichtung (53), eine Leitung (51), in die von der Gaserzeugungseinrichtung (53) erzeugtes Gas eingeblasen wird, eine Reihe aus einer Mehrzahl von Kugeln (56), die in der Leitung (51) angeordnet sind und von dem Gas beschleunigt werden, eine Kupplung, die mit der axial anderen Seite des Torsionsstabs zu koppeln ist, und Antriebsmittel (17, 52) zum Umwandeln der Bewegung der beschleunigten Kugeln (56) in eine Kraft zum Drehen des Torsionsstabs (7) umfasst.

12. Sitzgurtaufroller nach Anspruch 1, wobei
der Torsionsstab (7) mit der Spule (4) an der axial einen Seite desselben so gekoppelt ist, dass er in der Lage ist, einen vorherbestimmten Umfang einer relativen Drehversetzung zuzulassen, und durch eine relative Versetzung zwischen der axial einen Seite und der axial anderen Seite torsionsverformt wird, so dass er in der Lage ist, eine kinetische Energie eines Insassen zu absorbieren;
eine Arretierbasis (214) an der axial anderen Seite der Spule (4) angeordnet ist und mit der axial anderen Seite des Torsionsstabs gekoppelt ist;
eine erste Sperrklinke (213L) drehbar an der Arretierbasis (214) vorgesehen ist, um die Arretierbasis (214) bezüglich des festen Seitenelements (2) des Fahrzeugs gemäß der negativen Beschleunigung eines Fahrzeugs zu arretieren;
eine zweite Sperrklinke (13R) an der axial einen Seite der Spule drehbar vorgesehen ist, um die Spule bezüglich des festen Seitenelements (2) des Fahrzeugs gemäß der negativen Beschleunigung des Fahrzeugs zu arretieren;
der Vorspanner (11) an der axial anderen Seite der Spule (4) angeordnet ist, um die Drehantriebskraft zu erzeugen, um eine Drehung der Spule (4) in der Sitzgurtaufrollrichtung zu verursachen, und um in einem Zustand einer plötzlichen negativen Beschleunigung des Fahrzeugs dieselbe zu der Arretierbasis zu übertragen; und
eine Scherachse (215) so vorgesehen ist, dass sie durch die Arretierbasis (214) und die Spule (4) in der axialen Richtung als eine gemeinsame Drehachse durchtritt, die jeweils mit der ersten Sperrklinke (213L) und der zweiten Sperrklinke (13R) gekoppelt ist, und mit einem mutmaßlichen Scherabschnitt (215d) versehen ist, der gemäß einer darauf ausgeübten Last geschert werden soll,
wobei der mutmaßliche Scherabschnitt (215d) der Scherachse (215) eingerichtet ist, um eine Scherfestigkeit aufzuweisen, um in dem normalen Zustand den im Wesentlichen nicht gescherten Zustand aufrechtzuerhalten, um so einen gekoppelten Zustand zwischen der ersten Sperrklinke (213L) und der zweiten Sperrklinke (13R) beizubehalten, und um, wenn der Vorspanner (11) in dem Zustand einer plötzlichen negativen Beschleunigung des Fahrzeugs betätigt wird, auf der Basis einer Kraft geschert zu werden, die von dem Vorspanner (11) auf die Spule (4) ausgeübt wird, um eine Drehung derselben in der Sitzgurtaufrollrichtung zu verursachen, um den gekoppelten Zustand zwischen der ersten Sperrklinke (213L) und der zweiten Sperrklinke (13R) zu lösen.

13. Sitzgurtaufroller nach Anspruch 12, wobei die erste Sperrklinke (213L) von einer Feder mit einer Druckkraft in der Arretierrichtung der Arretierbasis (214) beaufschlagt wird, wenn die Scherachse (215) geschert ist, wodurch die Arretierfunktion erreicht wird.

14. Sitzgurtaufroller nach Anspruch 12 oder 13, wobei die zweite Sperrklinke (13R) die Arretierfunktion in Bezug auf die Spule (4) löst, wenn die Scherachse (215) geschert ist.

15. Sitzgurtaufroller nach einem der Ansprüche 12-14, wobei die Arretierbasis (214) mit einer Kurvennut an einer der Spule gegenüberliegenden Fläche ausgebildet ist, wobei die Scherachse (215) einen Nockenstift (215b) umfasst, der mit der Kurvennut in Eingriff zu bringen ist, um zu bewirken, dass die zweite Sperrklinke (13R) über die Scherachse (215) entlang der Kurvennut gedreht wird, wenn die relative Drehversetzung zwischen der Spule (4) und der Arretierbasis (214) auftritt, und wobei der mutmaßliche Scherabschnitt (215d) der Scherachse (215) an der Seite der ersten Sperrklinke (213L) bezüglich eines Verbindungsabschnitts der Scherachse (215) bezüglich des Nockenstifts (215b) vorgesehen ist.

16. Sitzgurtvorrichtung, umfassend
einen Sitzgurt (3) zum Zurückhalten eines Insassen;
einen Sitzgurtaufroller (1; 201) zum ausziehbaren Aufrollen einer Seite des Sitzgurts (3);
eine Zunge (104), welche an dem Sitzgurt (3) vorgesehen ist; und
eine Gurtschlosseinrichtung (105), um zu bewirken, dass der Insasse den Sitzgurt (3) trägt, indem sie mit der Zunge in Eingriff gebracht wird,
wobei der Sitzgurtaufroller der Sitzgurtaufroller nach einem der Ansprüche 1-15 ist.

## Revendications

1. Rétracteur de ceinture de sécurité comprenant :
une bobine (4) destinée à enrouler une ceinture de sécurité (3),
une barre de torsion (7) agencée radialement à l'intérieur de la bobine (4), la barre de torsion (7) étant couplée à la bobine (4) au niveau d'un premier côté axial de celle-ci et déformée en torsion par un déplacement relatif entre le premier côté axial et l'autre côté axial de façon à pouvoir absorber l'énergie cinétique du passager,
un prétendeur (11) destiné à engendrer une force d'entraînement en rotation pour entraîner en rotation la bobine (4) dans le sens d'enroulement de la ceinture de sécurité dans le cas d'une décélération soudaine d'un véhicule,
**caractérisé en ce que** le prétendeur est positionné sur l'autre côté axial de la bobine (4) et **en ce que**
un mécanisme de blocage de relais (13R, 13L, 14a, 14b, 15, 16, 18 ; 11 ; 13L', 18', 18" ; 213L) est destiné à bloquer la bobine par rapport à un élément latéral fixe (2) dans le véhicule de façon à limiter la rotation de la bobine (4) dans le sens de déroulement de la ceinture de sécurité dans l'état normal et à débloquer la bobine (4) par rapport à l'élément latéral fixe (2) tout en bloquant l'autre côté axial de la barre de torsion (7) par rapport à l'élément latéral fixe (2) de façon à limiter la rotation de celle-ci dans le sens de déroulement de la ceinture de sécurité dans le cas d'une décélération soudaine du véhicule.

2. Rétracteur de ceinture de sécurité selon la revendication 1, comprenant un élément de blocage (14 ; 214) positionné sur l'autre côté axial de la bobine (4) et relié à l'autre côté axial de la barre de torsion (7),
dans lequel le prétendeur (11) fournit une force d'entraînement en rotation destinée à entraîner en rotation la bobine (4) dans le sens d'enroulement de la ceinture de sécurité à l'élément de blocage (14 ; 214) dans le cas d'une décélération soudaine du véhicule et le mécanisme de blocage de relais comprend un premier élément de blocage (13L ; 13L' ; 213L) destiné à bloquer l'élément de blocage à l'élément latéral fixe (2) du véhicule.

3. Rétracteur de ceinture de sécurité selon la revendication 2, dans lequel le premier élément de blocage est un cliquet (13L ; 13L' ; 213L) prévu de façon à pouvoir tourner sur l'élément de blocage (14 ; 214) en vue de réaliser une opération de blocage par rapport à l'élément de blocage (14 ; 214) lorsque le déplacement en rotation relatif se produit entre l'élément de blocage (14 ; 214) et la bobine (4).

4. Rétracteur de ceinture de sécurité selon la revendication 2 ou 3, comprenant une goupille de cisaillement (16) prévue sur un premier élément parmi le premier élément de blocage (13L) et la bobine (4) de façon à être bloqué par rapport à l'autre de ces éléments, la goupille de cisaillement (16) étant cisaillée conformément à une charge appliquée sur celle-ci, dans lequel le premier élément de blocage est un cliquet (13L) qui réalise une opération de blocage avec une force de sollicitation appliquée par un ressort (18) dans le sens qui bloque l'élément de blocage lorsque la goupille de cisaillement (16) est cisaillée.

5. Rétracteur de ceinture de sécurité selon l'une quelconque des revendications 2 à 4, dans lequel le mécanisme de blocage de relais comprend un deuxième élément de blocage (13R) destiné à bloquer la bobine (4) par rapport à l'élément latéral fixe (2) du véhicule.

6. Rétracteur de ceinture de sécurité selon la revendication 5, dans lequel le deuxième élément de blocage est un cliquet (13R) prévu avec possibilité de rotation sur le premier côté axial de la bobine (4) en vue de réaliser l'opération de blocage par rapport à la bobine en fonction de la décélération du véhicule.

7. Rétracteur de ceinture de sécurité selon la revendication 5 ou 6, dans lequel le premier côté axial de la barre de torsion (7) et la bobine (4) sont couplés de façon à pouvoir accepter une quantité prédéterminée de déplacement en rotation relatif entre celles-ci et en ce que le deuxième élément de blocage est un cliquet (13R) destiné à libérer l'opération de blocage par rapport à la bobine (4) dans un état dans lequel le déplacement en rotation, au cours duquel la bobine (4) tourne relativement avant l'élément de blocage (14) dans le sens de déroulement de la ceinture de sécurité, se produit.

8. Rétracteur de ceinture de sécurité selon l'une quelconque des revendications 5 à 7, dans lequel l'élément de blocage (14 ; 214) est doté d'une gorge de came (14a, 14b) sur une surface opposée à la bobine, et le deuxième élément de blocage (13R) comprend un arbre à came (15 ; 215) s'étendant depuis un axe de rotation et une tige de came (15b ; 215b) qui doit être engagée avec la gorge de came (14a, 14b) en vue d'amener le deuxième élément de blocage (13R) à tourner par l'intermédiaire de l'arbre à came (15 ; 215) le long de la gorge de came (14a, 14b) lorsque le déplacement en rotation relatif se produit entre la bobine (4) et l'élément de blocage (14).

9. Rétracteur de ceinture de sécurité selon la revendication 1, dans lequel :
la barre de torsion (7) est couplée à la bobine (4) au niveau d'un premier côté axial de celle-ci de façon à pouvoir accepter une quantité prédéterminée de déplacement en rotation relatif et déformée en torsion par un déplacement relatif entre le premier côté axial et l'autre côté axial de façon à pouvoir absorber l'énergie cinétique d'un passager,
une base de blocage (14) est positionnée sur l'autre côté axial de la bobine et couplée à l'autre côté axial de la barre de torsion (7),
le prétendeur (11) est positionné sur l'autre côté axial de la bobine (4) pour transmettre la force d'entraînement en rotation destinée à entraîner en rotation la bobine (4) dans le sens d'enroulement de la ceinture de sécurité à la base de blocage (14) dans le cas d'une décélération soudaine d'un véhicule,
un premier cliquet (13L) est prévu avec possibilité de rotation sur la base de blocage (14) en vue d'être bloqué par rapport à une goupille de cisaillement (16) formée sur la bobine (4) dans l'état normal et cisaillant la goupille de cisaillement (16) lorsqu'un déplacement en rotation relatif dépassant la quantité prédéterminée se produit entre la base de blocage (14) et la bobine (4) par l'opération du prétendeur (11) pour bloquer la base de blocage (14) par rapport à un élément latéral fixe (2) du véhicule par une force de sollicitation appliquée par un ressort (18), et
un deuxième cliquet (13R) est prévu avec possibilité de rotation sur le premier côté axial de la bobine (4) et doté d'un mécanisme de came (15, 15a, 15b) en vue de bloquer la bobine (4) par rapport à l'élément latéral fixe (2) du véhicule selon une décélération du véhicule dans l'état normal et de libérer l'opération de blocage par rapport à la bobine (4) lorsqu'un déplacement en rotation relatif se produit entre la base de blocage (14) et la bobine (4) par l'opération du prétendeur (11),
dans lequel le mécanisme de came comprend un arbre à came (15) s'étendant depuis un axe de rotation du deuxième cliquet (13R) et une tige de came (15b) qui doit être engagée avec une gorge de came (14a, 14b) formée sur la base de blocage (14) en vue d'amener le deuxième cliquet (13R) à tourner par l'intermédiaire de l'arbre à came (15) le long de la gorge de came (14a, 14b) lorsqu'un déplacement en rotation relatif se produit entre la bobine (4) et la base de blocage (14), et amène le deuxième cliquet (13R) à tourner de façon à libérer l'opération de blocage par rapport à la bobine (4) dans un état dans lequel le déplacement en rotation, au cours duquel la bobine (4) tourne relativement avant l'élément de blocage (14) dans le sens de déroulement de la ceinture de sécurité, se produit.

10. Rétracteur de ceinture de sécurité selon la revendication 1, dans lequel :
le prétendeur (11) est positionné sur l'autre côté axial de la bobine (4) en vue de bloquer l'autre côté axial de la barre de torsion (7) par rapport à l'élément latéral fixe (2) de façon à limiter la rotation dans le sens de déroulement de la ceinture de sécurité de celle-ci pendant une durée prédéterminée, et
un élément de blocage (14) est prévu pour bloquer la bobine (4) par rapport à l'élément latéral fixe (2) du véhicule de façon à limiter la rotation de celle-ci dans le sens de déroulement de la ceinture de sécurité dans l'état normal et à débloquer la bobine (4) par rapport à l'élément latéral fixe (2) dans le cas d'une décélération soudaine du véhicule.

11. Rétracteur de ceinture de sécurité selon l'une quelconque des revendications 1 à 10, dans lequel le prétendeur (11) comprend un générateur de gaz (53), une conduite (51) dans laquelle un gaz engendré par le générateur de gaz (53) est soufflé, une série de plusieurs billes (56) agencées dans la conduite (51) et accélérées par le gaz, et un embrayage destiné à être couplé à l'autre côté axial de la barre de torsion, et un moyen d'entraînement (17, 52) destiné à convertir le mouvement des billes accélérées (56) en une force destinée à entraîner en rotation la barre de torsion (7).

12. Rétracteur de ceinture de sécurité selon la revendication 1, dans lequel :
la barre de torsion (7) est couplée à la bobine (4) au niveau du premier côté axial de celle-ci de façon à pouvoir accepter une quantité prédéterminée de déplacement en rotation relatif et déformée en torsion par un déplacement relatif entre le premier côté axial et l'autre côté axial de façon à pouvoir absorber l'énergie cinétique d'un passager,
une base de blocage (214) est positionnée sur l'autre côté axial de la bobine (4) et couplée à l'autre côté axial de la barre de torsion,
un premier cliquet (213L) est prévu avec possibilité de rotation sur la base de blocage (214) pour bloquer la base de blocage (214) par rapport à l'élément latéral fixe (2) du véhicule selon la décélération du véhicule,
un deuxième cliquet (13R) est prévu avec possibilité de rotation sur le premier côté axial de la bobine pour bloquer la bobine par rapport à l'élément latéral fixe (2) du véhicule selon la décélération du véhicule,
le prétendeur (11) est situé sur l'autre côté axial de la bobine (4) pour engendrer la force d'entraînement en rotation afin d'amener la bobine (4) à tourner dans le sens d'enroulement de la ceinture de sécurité et à transmettre celle-ci à la base de blocage dans le cas d'une décélération soudaine du véhicule, et
un axe de cisaillement (215) est prévu de façon à pénétrer à travers la base de blocage (214) et la bobine (4) dans la direction axiale en tant qu'axe de rotation commun qui est couplé respectivement au premier cliquet (213L) et au deuxième cliquet (13R) et est doté d'une partie de cisaillement présumée (215d) qui doit être cisaillée en fonction d'une charge appliquée à celle-ci,
dans lequel la partie de cisaillement présumée (215d) de l'axe de cisaillement (215) est établie pour présenter une résistance au cisaillement afin de maintenir l'état sensiblement sans cisaillement de façon à conserver un état couplé entre le premier cliquet (213L) et le deuxième cliquet (13R) dans l'état normal, et pour être cisaillée lorsque le prétendeur (11) est actionné dans l'état d'une décélération soudaine du véhicule sur la base d'une force appliquée à la bobine (4) pour amener celle-ci à tourner dans le sens d'enroulement de la ceinture de sécurité par le prétendeur (11) afin de libérer l'état couplé entre le premier cliquet (213L) et le deuxième cliquet (13R).

13. Rétracteur de ceinture de sécurité selon la revendication 12, dans lequel le premier cliquet (213L) reçoit une force de sollicitation dans le sens de blocage de la base de blocage (214) par un ressort lorsque l'axe de cisaillement (215) est cisaillé, grâce à quoi l'opération de blocage est réalisée.

14. Rétracteur de ceinture de sécurité selon la revendication 12 ou 13, dans lequel le deuxième cliquet (13R) libère l'opération de blocage par rapport à la bobine (4) lorsque l'axe de cisaillement (215) est cisaillé.

15. Rétracteur de ceinture de sécurité selon l'une quelconque des revendications 12 à 14, dans lequel la base de blocage (214) est dotée d'une gorge de came sur une surface opposée à la bobine, l'axe de cisaillement (215) comprend une tige de came (215b) qui doit être engagée avec la gorge de came pour amener le deuxième cliquet (13R) à être entraîné en rotation par l'intermédiaire de l'axe de cisaillement (215) le long de la gorge de came lorsque le déplacement en rotation relatif se produit entre la bobine (4) et la base de blocage (214), et la partie de cisaillement présumée (215d) de l'axe de cisaillement (215) est prévue sur le côté du premier cliquet (213L) par rapport à une partie d'articulation de l'axe de cisaillement (215) par rapport à la tige de came (215b).

16. Dispositif de ceinture de sécurité comprenant :
une ceinture de sécurité (3) destinée à contraindre un passager,
un rétracteur de ceinture de sécurité (1 ; 201) destiné à enrouler avec possibilité de déroulement un côté de la ceinture de sécurité (3),
une languette (104) prévue sur la ceinture de sécurité (3), et
un dispositif d'attache (105) destiné à amener le passager à porter la ceinture de sécurité (3) lorsqu'il est engagé avec la languette,
dans lequel le rétracteur de ceinture de sécurité est le rétracteur de ceinture de sécurité selon l'une quelconque des revendications 1 à 15.
